# EUROPEAN PATENT APPLICATION

(11) **EP 4 664 582 A1**
(43) Date of publication of application: **17.12.2025**
(21) Application number: 23934916.0
(22) Date of filing: 10.10.2023
(51) Int. Cl.: H01M 10/0525, H01M 50/536, H01M 50/533

(54) **BATTERY CELL, BATTERY, AND ELECTRIC DEVICE**

(30) Priority: 28.04.2023 CN 202310483960
(71) Applicant: Contemporary Amperex Technology Co., Limited, Ningde, Fujian 352100 (CN)
(72) Inventor: SHI, Ke, Ningde, Fujian 352100 (CN); CHAI, Zhisheng, Ningde, Fujian 352100 (CN); GU, Hui, Ningde, Fujian 352100 (CN)
(74) Representative: Ran, Handong
(86) International application number: PCT/CN2023/123743
(87) International publication number: WO 2024/221747

(57) **Abstract**

A battery cell, a battery, and an electric device, relating to the technical field of batteries. The battery cell comprises a housing assembly, an electrode assembly, and a current collector assembly. The housing assembly comprises an electrode lead-out portion for inputting or outputting electric energy. The electrode assembly is accommodated in the housing assembly. The electrode assembly comprises a main body and a tab, and the tab is provided on the main body. The materials of the tab and the electrode lead-out portion are different. The current collector assembly comprises an additional portion of the same material as the electrode lead-out portion and a main body portion of the same material as the tab. The additional portion is connected to the main body portion. The additional portion is connected to the electrode lead-out portion in a welded manner. The main body portion is connected to the tab in a welded manner. By configuring the additional portion and the electrode lead-out portion to be made of the same material and welded to each other, phenomena such as different melting points and coefficients of thermal expansion caused by welding of the current collector assembly and the electrode lead-out portion of different materials are alleviated, thereby reducing welding cracks between the current collector assembly and the electrode lead-out portion, and reducing the risk of electrolyte leakage in the battery cell.

## Description

### CROSS-REFERENCE TO RELATED APPLICATIONS

The present application claims priority to Chinese Patent Application No. 2023104839607, filed on April 28, 2023 and entitled "Battery Cell, Battery, and Electric Device", which is incorporated herein by reference in its entirety.

### TECHNICAL FIELD

The present application relates to the field of battery technologies, and in particular, to a battery cell, a battery, and an electric device.

### BACKGROUND

In recent years, new energy vehicles have been developed with a great leap. In the field of electric vehicles, power batteries play an irreplaceably important role as a power source of the electric vehicle. As new energy vehicles are heavily promoted, there is an increasing demand for power battery products, and there is a high requirement for use reliability of the battery as a core component of the new energy vehicle. The battery cell generally includes a housing, an electrode assembly accommodated in the housing, and an electrolyte. However, an existing battery cell often suffers from leakage of the electrolyte during use, resulting in poor reliability of the battery cell.

### SUMMARY

Embodiments of the present application provide a battery cell, a battery, and an electric device, to effectively improve reliability of the battery cell.

According to a first aspect, an embodiment of the present application provides a battery cell, comprising a housing assembly, an electrode assembly, and a current collecting member. The housing assembly comprises an electrode lead-out portion for inputting or outputting electric energy. The electrode assembly is accommodated in the housing assembly, wherein the electrode assembly comprises a body and a tab, the tab is disposed on the body, and a material of the tab is different from that of the electrode lead-out portion. The current collecting member is disposed in the housing assembly, wherein the current collecting member comprises a body portion having a same material as the tab and an additional portion having a same material as the electrode lead-out portion, the body portion is connected to the additional portion, the body portion is connected to the tab through welding, and the additional portion is connected to the electrode lead-out portion through welding.

In the foregoing technical solution, the current collecting member is disposed as the body portion and the additional portion that are connected to each other, the body portion is connected to the tab through welding, and the additional portion is connected to the electrode lead-out portion of the housing assembly through welding, to implement an electrical connection between the electrode assembly and the electrode lead-out portion, and implement inputting or outputting of electric energy of the battery cell. A material of the body portion is set to be the same as a material of the tab, and a material of the additional portion is set to be the same as a material of the electrode lead-out portion, so that the battery cell of such a structure can facilitate a welding connection between the current collecting member and the electrode lead-out portion and a welding connection between the current collecting member and the tab, and help reduce difficulty in assembling the current collecting member and the electrode lead-out portion and assembling the current collecting member and the tab of the electrode assembly, to improve assembly efficiency of the battery cell. In addition, the current collecting member and the electrode lead-out portion of a same material can be welded to each other, so as to alleviate difference in melting point and thermal expansion coefficient caused by welding of the current collecting member and the electrode lead-out portion with different materials, and reduce welding cracks in the current collecting member and the electrode lead-out portion. This helps reduce a leakage risk of the battery cell, and improve reliability of the battery cell.

In some embodiments, at least a part of the current collecting member is disposed between the electrode assembly and the electrode lead-out portion in a first direction, wherein in the first direction, the additional portion is connected to a side that is of the body portion and that faces away from the electrode assembly.

In the foregoing technical solution, at least a part of the current collecting member is disposed between the electrode assembly and the electrode lead-out portion, and in the first direction, the additional portion is disposed on the side that is of the body portion and that faces away from the electrode assembly, so that the additional portion and the body portion of the current collecting member are structures arranged in the first direction, and the additional portion is disposed facing the electrode lead-out portion, thereby facilitating mutual welding of the additional portion of the current collecting member and the electrode lead-out portion of the housing assembly and mutual welding of the body portion of the current collecting member and the tab of the electrode assembly. This helps reduce difficulty in assembling the electrode lead-out portion and the current collecting member connected to each other and assembling the tab and the current collecting member connected to each other, to improve assembly efficiency of the battery cell.

In some embodiments, in the first direction, the body portion has a first surface facing the electrode lead-out portion, an accommodating groove is disposed on the first surface, and at least a part of the additional portion is accommodated in the accommodating groove.

In the foregoing technical solution, the accommodating groove is disposed on the first surface that is of the body portion and that faces the electrode lead-out portion, and at least a part of the additional portion is accommodated in the accommodating groove of the body portion, so that space occupied by the current collecting member in the first direction can be reduced, and the weight of the current collecting member can be reduced, thereby facilitating optimization of the weight of the battery cell and the size of the battery cell in the first direction, to increase the energy density of the battery cell.

In some embodiments, in the first direction, the additional portion protrudes from the first surface, and a part that is of the additional portion and that protrudes from the first surface is connected to the electrode lead-out portion through welding.

In the foregoing technical solution, the additional portion is disposed to protrude from the first surface of the body portion in the first direction, that is, the additional portion extends out of the accommodating groove in the first direction, so that a part that is of the additional portion and that extends out of the accommodating groove and the electrode lead-out portion can abut against each other, to reduce occurrence of a gap between the additional portion and the electrode lead-out portion due to interference of the body portion. This helps improve a contact effect between the additional portion and the electrode lead-out portion, to alleviate a risk of pseudo soldering or poor welding between the additional portion and the electrode lead-out portion, and effectively improve a welding effect between the additional portion and the electrode lead-out portion.

In some embodiments, in the first direction, the additional portion has a second surface facing the electrode lead-out portion, and the second surface is flush with the first surface.

In the foregoing technical solution, the second surface that is of the additional portion and that faces the electrode lead-out portion in the first direction and the first surface that is of the body portion and that faces the electrode lead-out portion in the first direction are disposed to be flush, so that the thickness of the additional portion in the first direction is the same as the depth of the accommodating groove in the first direction. Therefore, space occupied by the current collecting member in the electrode lead-out portion and the electrode assembly can be further optimized while reducing occurrence of a gap between the additional portion and the electrode lead-out portion due to interference of the body portion. This helps improve internal space utilization of the battery cell, and can increase energy density of the battery cell.

In some embodiments, the additional portion is of an annular structure.

In the foregoing technical solution, the additional portion is disposed as an annular structure. This helps increase a welding area between the additional portion and the electrode lead-out portion, to improve connection stability between the additional portion and the electrode lead-out portion. In addition, overcurrent balance between the current collecting member and the electrode lead-out portion can be improved by using the additional portion in the annular structure. This helps reduce occurrence of a large local overcurrent between the current collecting member and the electrode lead-out portion.

In some embodiments, the accommodating groove is an annular groove extending in an extension direction of the additional portion.

In the foregoing technical solution, the accommodating groove is disposed in the annular groove in a direction the same as the extension direction of the additional portion, so that the additional portion is accommodated in the accommodating groove, and a certain limiting and locating function can be performed on the additional portion. This helps reduce difficulty in assembling the additional portion and the body portion. In addition, only the annular accommodating groove that matches the shape of the additional portion needs to be disposed on the first surface. This helps reduce difficulty in processing the accommodating groove and reduce a processing range of the accommodating groove.

In some embodiments, the current collecting member comprises a plurality of additional portions, the plurality of additional portions each are connected to the body portion, and in the first direction, projections of the plurality of the additional portions in a plane perpendicular to the first direction do not overlap each other.

In the foregoing technical solution, the plurality of additional portions are disposed on the current collecting member, the plurality of additional portions each are connected to a side that is of the body portion and that faces away from the electrode assembly, and projections of the plurality of additional portions in the first direction do not overlap, so that overcurrent efficiency between the current collecting member and the electrode lead-out portion can be improved after the plurality of additional portions each are connected to the electrode lead-out portion through welding.

In some embodiments, the body portion is connected to the additional portion through welding.

In the foregoing technical solution, the body portion and the additional portion are connected through welding, so that strength and stability of connection between the additional portion and the body portion can be effectively improved, to reduce likelihood of the additional portion separating from the body portion during use. This helps improve overcurrent stability between the additional portion and the body portion, and effectively improve use stability of the battery cell.

In some embodiments, the current collecting member is disposed between the electrode assembly and the electrode lead-out portion in the first direction, wherein in the first direction, the body portion has the first surface facing the electrode lead-out portion, in a second direction, the additional portion has a first side surface, the first side surface is connected to the first surface through welding, and the second direction is perpendicular to the first direction.

In the foregoing technical solution, the first surface of the body portion in the first direction and the first side surface of the additional portion in the second direction are connected to each other through welding, so that the body portion and the additional portion are connected to each other through fillet welding, to implement the welding connection between the body portion and the additional portion. When the current collecting member of such a structure is used, a larger depth of fusion can be obtained at a lower welding power. This helps improve a welding effect between the additional portion and the body portion, and effectively improve stability of connection between the additional portion and the body portion. In addition, a welding mark formed by welding between the additional portion and the body portion can be located on a side of the additional portion in the second direction, thereby reducing interference of the welding mark formed by mutual welding between the additional portion and the body portion on mutual abutting and welding connection of the additional portion and the electrode lead-out portion in the first direction. This helps improve a contact effect of the additional portion and the electrode lead-out portion, to alleviate a risk of pseudo soldering or poor welding between the additional portion and the electrode lead-out portion, and effectively improve welding quality between the additional portion and the electrode lead-out portion.

In some embodiments, in the second direction, the additional portion has two first side surfaces disposed opposite to each other, and the two first side surfaces each are connected to the first surface through welding.

In the foregoing technical solution, the two opposing first side surfaces of the additional portion in the second direction each are welded to the first surface, so that strength and stability of connection between the additional portion and the body portion are improved, and overcurrent efficiency between the additional portion and the body portion can be improved.

In some embodiments, the additional portion is of an annular structure, and the two first side surfaces are respectively an inner circumferential surface and an outer circumferential surface of the additional portion.

In the foregoing technical solution, the additional portion is disposed as an annular structure, and both the inner circumferential surface and the outer circumferential surface of the additional portion are welded to the first surface of the body portion. This helps increase a welding area between the additional portion and the body portion, to further improve stability of connection between the additional portion and the body portion, and can improve overcurrent balance between the additional portion and the body portion, to help reduce occurrence of a large local overcurrent between the additional portion and the body portion.

In some embodiments, the two first side surfaces each are connected to the first surface through welding to form two first welding portions, wherein projections of the two first welding portions in a plane perpendicular to the first direction do not overlap.

In the foregoing technical solution, the projections, in the first direction, of the two first welding portions formed by mutual welding between the two first side surfaces of the additional portion and the first surface of the body portion are disposed to not overlap each other, so that the two first welding portions are structures mutually staggered in the first direction, thereby reducing occurrence of weld pool penetration between the two first welding portions. This helps improve welding quality between the additional portion and the body portion.

In some embodiments, the accommodating groove for accommodating the additional portion is disposed on the first surface, and the additional portion protrudes from the first surface in the first direction, so that the first side surface extends to the outside of the accommodating groove.

In the foregoing technical solution, the accommodating groove for accommodating the additional portion is disposed on the first surface that is of the body portion and that faces the electrode lead-out portion, and the additional portion protrudes from the first surface in the first direction, so that the first side surface can extend from the inside of the accommodating groove to the outside of the accommodating groove. When the current collecting member of such a structure is used, the space occupied by the current collecting member in the first direction can be reduced, and the weight of the current collecting member can be reduced, thereby facilitating optimization of the weight of the battery cell and the size of the battery cell in the first direction, to increase the energy density of the battery cell. In addition, a part of the first side surface is in the accommodating groove, and the other part is outside the accommodating groove, that is, both sides of the first surface in the first direction have the first side surface, thereby improving a welding effect between the first surface and the first side surface, to improve welding quality between the additional portion and the body portion.

In some embodiments, in the first direction, the groove depth of the accommodating groove is H₁, and the thickness of the additional portion is H₂, which satisfy H₂ - H₁ ≥ 0.2 H₂.

In the foregoing technical solution, a difference between the thickness of the additional portion in the first direction and the groove depth of the accommodating groove in the first direction is set to be greater than or equal to 0.2 times the thickness of the additional portion in the first direction, that is, a size of the part that is of the additional portion and that protrudes from the first surface in the first direction is greater than or equal to 0.2 times the thickness of the additional portion in the first direction. This helps alleviate a case in which a welding mark formed by mutual welding between the first surface and the first side surface exceed a side that is of the additional portion and that faces the electrode lead-out portion in the first direction, and effectively reduce a risk that the additional portion and the electrode lead-out portion are in poor contact or cannot be contacted due to interference caused by mutual welding formed between the additional portion and the electrode lead-out portion, to alleviate pseudo soldering or poor welding between the additional portion and the electrode lead-out portion, and effectively improve welding quality between the additional portion and the electrode lead-out portion.

In some embodiments, the first side surface abuts against a groove side surface of the accommodating groove.

In the foregoing technical solution, the accommodating groove is disposed on the first surface, and the first side surface and the groove side surface of the accommodating groove abut against each other, so that a gap between the first side surface and the first surface can be reduced. This helps improve welding quality between the first side surface and the first surface.

In some embodiments, the additional portion is connected to the body portion through welding to form at least one first welding portion, and the body portion is connected to the tab through welding to form at least one second welding portion, wherein projections of the at least one first welding portion and the at least one second welding portion in a plane perpendicular to the first direction do not overlap.

In the foregoing technical solution, projections, in the first direction, of the first welding portion formed by welding the additional portion and the body portion and the second welding portion formed by welding the body portion and the tab are disposed to not overlap each other, so that the first welding portion and the second welding portion are structures mutually staggered in the first direction, thereby reducing occurrence of a weld pool between the first welding portion and the second welding portion. This helps improve welding quality between the additional portion and the body portion and between the body portion and the tab.

In some embodiments, the additional portion surrounds an outer side of the second welding portion.

In the foregoing technical solution, the additional portion is disposed as a structure around the outer side of the second welding portion formed by welding the body portion and the tab, that is, the second welding portion formed by welding the body portion and the tab is located on an inner circumferential side of the additional portion. This helps shorten an overcurrent path between the tab and the current collecting member.

In some embodiments, the at least one second welding portion comprises two second welding portions, the additional portion surrounds an outer side of one second welding portion, and the other second welding portion surrounds an outer side of the additional portion.

In the foregoing technical solution, two second welding portions are formed by welding the body portion and the tab, one second welding portion in the two second welding portions is located on the inner circumferential side of the additional portion, and the other second welding portion is located on an outer circumferential side of the additional portion, thereby helping further improve overcurrent efficiency between the tab and the current collecting member.

In some embodiments, the additional portion is connected to the body portion through welding to form the at least one first welding portion, and the additional portion is connected to the electrode lead-out portion through welding to form at least one third welding portion, wherein projections of the at least one first welding portion and the at least one third welding portion in a plane perpendicular to the first direction do not overlap.

In the foregoing technical solution, projections, in the first direction, of the first welding portion formed by welding the additional portion and the body portion and the third welding portion formed by welding the additional portion and the electrode lead-out portion are disposed to not overlap each other, so that the first welding portion and the third welding portion are structures mutually staggered in the first direction, thereby reducing occurrence of a weld pool between the first welding portion and the third welding portion. This helps improve welding quality between the additional portion and the body portion and between the additional portion and the electrode lead-out portion.

In some embodiments, the third welding portion penetrates the electrode lead-out portion in the first direction.

In the foregoing technical solution, the third welding portion is disposed as a structure that penetrates the electrode lead-out portion in the first direction, so that reliability of connection between the additional portion and the electrode lead-out portion can be improved, and the additional portion and the electrode lead-out portion can be easily welded from the outside of the electrode lead-out portion. This helps reduce welding difficulty.

In some embodiments, the third welding portion is configured to be formed by irradiating a laser from a side that is of the electrode lead-out portion and that faces away from the electrode assembly to melt at least parts of the electrode lead-out portion and the additional portion.

In the foregoing technical solution, the third welding portion is formed through welding by irradiating the laser outside the electrode lead-out portion. This helps reduce difficulty in welding the additional portion and the electrode lead-out portion, to improve assembly efficiency of the battery cell.

In some embodiments, the third welding portion does not penetrate the additional portion in the first direction.

In the foregoing technical solution, the third welding portion is disposed as a structure that does not penetrate the additional portion in the first direction, so that welding power required for welding the additional portion and the electrode lead-out portion can be reduced, which helps reduce welding difficulty, and adverse impact on the body portion and the tab because the third welding portion penetrates the additional portion can be reduced.

In some embodiments, the additional portion is connected to the body portion through welding to form the at least one first welding portion, the body portion is connected to the tab through welding to form the at least one second welding portion, and the additional portion is connected to the electrode lead-out portion through welding to form the at least one third welding portion, wherein a projected area of the at least one first welding portion in a plane perpendicular to the first direction is S₁, a projected area of the at least one second welding portion in a plane perpendicular to the first direction is S₂, and a projected area of the at least one third welding portion in a plane perpendicular to the first direction is S₃, which satisfy 0.8 ≤ S₁/S₂ ≤ 1.2, and/or 0.8 ≤ S₁/S₃ ≤ 1.2, and/or 0.8 ≤ S₂/S₃ ≤ 1.2.

In the foregoing technical solution, a ratio between the projected area of the at least one first welding portion in the plane perpendicular to the first direction, the projected area of the at least one second welding portion in the plane perpendicular to the first direction, and the projected area of the at least one third welding portion in the plane perpendicular to the first direction is set to 0.8 to 1.2, so that the projected area of the at least one first welding portion in the plane perpendicular to the first direction, the projected area of the at least one second welding portion in the plane perpendicular to the first direction, and the projected area of the at least one third welding portion in the plane perpendicular to the first direction are close to each other. In this way, a bottleneck or a limitation on an overall overcurrent capacity caused by an excessively small projected area of one of the first welding portion, the second welding portion, and the third welding portion in the first direction can be alleviated, and an excess local overcurrent capacity caused by an excessively large projected area of one of the first welding portion, the second welding portion, and the third welding portion in the first direction can be alleviated. Therefore, unnecessary waste can be reduced, and production costs of the battery cell can be reduced.

In some embodiments, the additional portion is connected to the body portion through welding to form the at least one first welding portion, and the first welding portion is of an annular structure; and/or the body portion is connected to the tab through welding to form the at least one third welding portion, and the third welding portion is of an annular structure.

In the foregoing technical solution, the first welding portion formed by mutual welding between the additional portion and the body portion is disposed as an annular structure. This helps improve stability of connection between the additional portion and the body portion, and increase an overcurrent area and improve overcurrent balance between the additional portion and the body portion, to improve an overcurrent effect between the additional portion and the body portion. Similarly, the third welding portion formed by mutual welding between the body portion and the tab is disposed as an annular structure. This helps improve the connection stability between the body portion and the tab, and increase the overcurrent area and improve the overcurrent balance between the body portion and the tab, to improve an overcurrent effect between the body portion and the tab.

In some embodiments, the tab is disposed at an end that is of the body and that faces the body portion.

In the foregoing technical solution, the tab is disposed at the side that is of the body and that faces the body portion of the current collecting member in the first direction, so that the tab and the body portion are arranged facing each other in the first direction, and the body portion of the current collecting member and the tab of the electrode assembly are connected to each other through welding. This helps reduce difficulty in assembling the current collecting member and the tab.

In some embodiments, the body is cylindrical.

In the foregoing technical solution, the body of the electrode assembly is disposed as a cylindrical structure so as to be processed subsequently to form a battery cell having a cylindrical structure, so that the battery cell has advantages of high capacity, long cycle life, a wide operating environment temperature, and the like.

In some embodiments, the housing assembly comprises a housing, and the electrode assembly is accommodated in the housing, wherein the housing has a wall portion, and the wall portion is the electrode lead-out portion.

In the foregoing technical solution, the housing is disposed on the housing assembly. The wall portion of the housing is used as the electrode lead-out portion, so that the tab is connected to the wall portion of the housing via the current collecting member to implement inputting or outputting of electric energy of the battery cell, which has a simple structure and is easy to assemble.

In some embodiments, a convex portion is formed on a side that is of the wall portion and that faces the electrode assembly, and the convex portion is connected to the additional portion through welding.

In the foregoing technical solution, the convex portion is formed on the side that is of the wall portion and that faces the electrode assembly, and the convex portion is connected to the additional portion of the current collecting member through welding, to implement a welding connection between the additional portion and the wall portion. In the battery cell of such a structure, the wall portion and the additional portion of the current collecting member abut against each other via the convex portion, and then are connected through welding. This helps reduce difficulty in welding the additional portion and the wall portion.

In some embodiments, a groove is formed at a side that is of the wall portion and that faces away from the electrode assembly and at a position corresponding to the convex portion.

In the foregoing technical solution, the groove is formed at the side that is of the wall portion and that faces away from the electrode assembly and at the position corresponding to the convex portion, so that the wall portion is in a concavo-convex structure formed through stamping, and the convex portion and the groove are formed on both sides of the wall portion, respectively. This helps reduce processing difficulty to improve processing efficiency. In addition, the wall portion of such a structure can be used to effectively improve structural strength of the wall portion to alleviate deformation occurring when the wall portion and the additional portion are connected to each other through welding, thereby helping improve production quality of the battery cell.

In some embodiments, the housing assembly further comprises a housing, and the electrode assembly is accommodated in the housing, wherein the housing has a wall portion, and the electrode lead-out portion is mounted on the wall portion in an insulated manner.

In the foregoing technical solution, the housing is further disposed on the housing assembly, and the electrode lead-out portion is mounted on the wall portion of the housing in an insulated manner, so that electric energy of the battery cell can be input or output through the electrode lead-out portion. The battery cell of such a structure can be used to reduce a risk of a short circuit between the electrode lead-out portion and the housing.

In some embodiments, the housing comprises a case and an end cap. An accommodating cavity having an opening is formed in the case, wherein the electrode assembly is accommodated in the accommodating cavity; and the end cap closes the opening, wherein the end cap is the wall portion.

In the foregoing technical solution, the wall portion of the housing is the end cap of the housing for closing the opening of the case, and the battery cell of such a structure is used to facilitate assembly of the current collecting member. This helps reduce difficulty of connection between the current collecting member and the tab, to improve production efficiency of the battery cell.

In some embodiments, the housing comprises a case and an end cap. The case comprises a side wall and the wall portion that are integrally formed, wherein the side wall is disposed around the wall portion, one end of the side wall is connected to the wall portion, the other end of the side wall encloses an opening opposite to the wall portion, and the side wall and the wall portion jointly define an accommodating cavity for accommodating the electrode assembly; and the end cap closes the opening.

In the foregoing technical solution, the wall portion is disposed as a wall that is of the case and that is disposed opposite to the end cap, so that the battery cell of such a structure can be used to keep the current collecting member and the like away from the end cap, and there is no direct connection relationship between the wall portion and the end cap, so as to alleviate a phenomenon that force generated when the current collecting member and the like pull or twist the wall portion acts on the end cap, thereby reducing a risk of a connection failure between the end cap and the case, and further reducing a leakage risk of the battery cell during use.

According to a second aspect, an embodiment of the present application further provides a battery, comprising the foregoing battery cell.

According to a third aspect, an embodiment of the present application further provides an electric device, comprising the foregoing battery.

### DESCRIPTION OF DRAWINGS

To describe the technical solutions in the embodiments of the present application more clearly, the following briefly describes the accompanying drawings required for describing the embodiments. It should be understood that the following accompanying drawings show only some embodiments of the present application, and therefore should not be considered as a limitation on the scope. A person of ordinary skill in the art may further obtain other related accompanying drawings according to these accompanying drawings without creative efforts.
FIG. 1 is a schematic structural diagram of a vehicle according to some embodiments of this application.
FIG. 2 is an exploded diagram of a structure of a battery according to some embodiments of the present application.
FIG. 3 is a schematic diagram of a structure of a battery cell according to some embodiments of the present application.
FIG. 4 is an exploded diagram of a structure of a battery cell according to some embodiments of the present application.
FIG. 5 is a partial cross-sectional view of a battery cell according to some embodiments of the present application.
FIG. 6 is a partial enlarged view of the battery cell shown in FIG. 5 at a position A.
FIG. 7 is a schematic diagram of a structure of a current collecting member according to some embodiments of the present application.
FIG. 8 is a cross-sectional view of a current collecting member according to some embodiments of the present application.
FIG. 9 is a partial enlarged view of the current collecting member shown in FIG. 8 at a position B.
FIG. 10 is a schematic diagram of a structure of a current collecting member according to some other embodiments of the present application.
FIG. 11 is a cross-sectional view of a current collecting member according to some other embodiments of the present application.
FIG. 12 is a schematic diagram of welding a current collecting member and a tab, and welding a current collecting member and an electrode lead-out portion according to some embodiments of the present application.
FIG. 13 is a schematic diagram of a structure of a battery cell according to some other embodiments of the present application.
FIG. 14 is an exploded diagram of a structure of a battery cell according to some other embodiments of the present application.
FIG. 15 is a partial cross-sectional view of a battery cell according to some other embodiments of the present application.

Reference signs: 1000-Vehicle; 100-Battery; 10-Box; 11-First box body; 12-Second box body; 20-Battery cell; 21-Housing assembly; 211-Electrode lead-out portion; 212-Housing; 2121-Wall portion; 2121a-Convex portion; 2121b-Groove; 2122-Case; 2122a-Opening; 2123-End cap; 22-Electrode assembly; 221-Body; 222-Tab; 23-Current collecting member; 231-Body portion; 2311-First surface; 2312-Accommodating groove; 2313-Central through hole; 232-Additional portion; 2321-First side surface; 2322-Second surface; 233-First welding portion; 24-Second welding portion; 25-Third welding portion; 200-Controller; 300-Motor; X-First direction; Y-Second direction.

### DESCRIPTION OF EMBODIMENTS

To make the objectives, technical solutions, and advantages of embodiments of the present application clearer, the following clearly describes the technical solutions in embodiments of the present application with reference to the accompanying drawings in the embodiments of the present application. Clearly, the described embodiments are some but not all of the embodiments of the present application. All other embodiments obtained by a person of ordinary skill in the art based on the embodiments of the present application without making creative efforts shall fall within the protection scope of the present application.

Unless otherwise defined, all technical and scientific terms used in the present application have the same meaning as commonly understood by a person skilled in the art of the present application. In the present application, the terms used in the specification of the present application are used only for the purpose of describing specific embodiments and are not intended to limit the present application, and the terms "comprise", "have", and any variations thereof in the specification and claims of the present application and the foregoing description of the drawings are intended to cover a non-exclusive inclusion. The terms "first", "second", and the like in the specification and claims of the present application or in the accompanying drawings are used to distinguish between different objects, and are not used to describe a specific sequence or a primary-secondary relationship.

An "embodiment" in the present application means that a specific feature, structure, or characteristic described with reference to the embodiment may be included in at least one embodiment of the present application. The phrase in various places in the description does not necessarily all refer to the same embodiment, or a separate or alternative embodiment mutually exclusive of other embodiments.

In the description of the present application, it should be noted that, unless explicitly specified and defined otherwise, the terms "mounted", "connected", "connect", and "attached" are to be understood in a broad sense, for example, may be fixedly connected, detachably connected, or integrally connected, may be directly connected, may be indirectly connected via an intermediate medium, or may be internal communication between two components. A person of ordinary skill in the art can understand specific meanings of these terms in the present application according to specific situations.

The term "and/or" in this application is only an associative relationship for describing associated objects, indicating that three relationships may be present. For example, A and/or B may indicate three cases: presence of only A; presence of both A and B; and presence of only B. In addition, the symbol "/" in the present application generally represents an "or" relationship between associated objects.

In the embodiments of the present application, the same reference numerals denote the same component, and a detailed description of the same component is omitted in different embodiments for sake of brevity. It should be understood that the size of various components, such as the thickness, length, and width, and the size of the integrated device, such as the overall thickness, length, and width, in the embodiments of the present application shown in the figures are merely illustrative and should not be construed as limiting the present application.

The term "a plurality" as used herein refers to more than two (including two).

In the embodiments of the present application, the battery cell may be a secondary battery, and the secondary battery refers to a battery cell that may be continuously used by activating an active material by charging the battery cell after discharging thereof.

The battery cell may be a lithium ion battery, a sodium ion battery, a sodium-lithium ion battery, a lithium metal battery, a sodium metal battery, a lithium-sulfur battery, a magnesium ion battery, a nickel-hydrogen battery, a nickel-cadmium battery, a lead-acid battery, or the like, without limitation for the battery cell in the embodiments of the present application.

The battery cell generally includes an electrode assembly. The electrode assembly includes a positive electrode, a negative electrode, and a spacer. During charge and discharge of the battery cell, intercalation/de-intercalation of active ions (e.g., lithium ions) are enabled at the positive electrode and negative electrode by moving the active ions between the positive electrode and negative electrode. The spacer is provided between the positive electrode and the negative electrode to prevent the positive and negative electrodes from being short-circuited and to allow active ions to pass therethrough.

In some embodiments, the positive electrode may be a positive plate which may include a positive current collector and a positive active material disposed on at least one surface of the positive current collector.

As an example, the positive current collector has two surfaces opposite in its own thickness direction, and the positive active material is provided on either one or both of the two opposite surfaces of the positive current collector.

As an example, for the positive current collector, a metal foil or a composite current collector may be employed. For example, as the metal foil, aluminum or stainless steel which is subjected to surface treatment by silver, stainless steel, copper, aluminum, nickel, carbon electrode, carbon, nickel, titanium, or the like can be employed. The composite current collector may include a high-molecular material base layer and a metal layer. The composite current collector may be formed by forming a metal material (aluminum, an aluminum alloy, nickel, a nickel alloy, titanium, a titanium alloy, silver, a silver alloy, or the like) on a substrate of a high-molecular material (a substrate of polypropylene, polyethylene terephthalate, polybutylene terephthalate, polystyrene, polyethylene, or the like).

As an example, the positive active material may include at least one of a lithium-containing phosphate, a lithium-transition metal oxide, and respective modified compounds thereof. However, the present application is not limited to these materials, and other conventional materials that can be used as a positive electrode active material of a battery may also be used. These positive electrode active materials may be used alone or in combination of two or more of them. Here, examples of the lithium-containing phosphate may include, but are not limited to, at least one of lithium iron phosphate (e.g., LiFePO4, also referred to as LFP), a composite material of lithium iron phosphate and carbon, lithium manganese phosphate (e.g., LiMnPO4), a composite material of lithium manganese phosphate and carbon, lithium ferro-manganese phosphate, and a composite material of lithium ferro-manganese phosphate and carbon.

In some embodiments, the negative electrode may be a negative plate that may include a negative current collector.

As an example, for the negative current collector, a metal foil, a foamed metal, or a composite current collector may be employed. For example, as the metal foil, aluminum or stainless steel which is subjected to surface treatment by silver, stainless steel, copper, aluminum, nickel, carbon electrode, carbon, nickel, titanium, or the like can be employed. The foamed metal may be foamed nickel, foamed copper, foamed aluminum, foamed alloy, foamed carbon, or the like. The composite current collector may include a high-molecular material base layer and a metal layer. The composite current collector may be formed by forming a metal material (copper, a copper alloy, nickel, a nickel alloy, titanium, a titanium alloy, silver, a silver alloy, or the like) on a substrate of a high-molecular material (a substrate of polypropylene, polyethylene terephthalate, polybutylene terephthalate, polystyrene, polyethylene, or the like).

As an example, the negative plate may include a negative current collector and a negative active material provided on at least one surface of the negative current collector.

As an example, the negative current collector has two surfaces opposite in its own thickness direction, and the negative active material is provided on either one or both of the two opposite surfaces of the negative current collector.

As an example, for the negative active material, a negative active material which is known in the art for a battery cell may be used. As an example, the negative electrode active material may include at least one of the following materials: synthetic graphite, natural graphite, soft carbon, hard carbon, a silicon-based material, a tin-based material, lithium titanate, and the like.

In some embodiments, the material of the positive current collector may be aluminum and the material of the negative current collector may be copper.

In some implementations, the electrode assembly further includes a spacer, and the spacer is disposed between a positive electrode and a negative electrode.

In some implementations, the spacer is a separator. There may be a plurality of types of separators, and any known separator of a porous structure with good chemical stability and mechanical stability may be used.

As an example, the main material of the separator may be selected from at least one of glass fiber, non-woven fabric, polyethylene, polypropylene, polyvinylidene fluoride, and ceramics.

In some implementations, the spacer is a solid electrolyte. The solid electrolyte is disposed between the positive electrode and the negative electrode, and serves to transfer ions and separate the positive electrode and negative electrode.

In some implementations, the battery cell further comprises an electrolyte that functions to conduct ions between the positive electrode and negative electrode. The electrolyte may be liquid or gel.

In some implementations, the electrode assembly is of a winding structure. The positive plate and the negative plate are wound into a winding structure.

In some implementations, the electrode assembly is a laminated structure.

In some implementations, the electrode assembly may be cylindrical, flat, polygon prism-shaped, or the like.

In some implementations, the electrode assembly is provided with a tab that may conduct current from the electrode assembly. The tab includes a positive tab and a negative tab.

In some implementations, the battery cell may include a housing. The housing is used to enclose components such as the electrode assembly and the electrolyte. The housing may be a steel housing, an aluminum housing, a plastic housing (e.g., polypropylene), a composite metal housing (e.g., a copper-aluminum composite housing), an aluminum plastic film, or the like.

As an example, the battery cell may be a cylindrical battery cell, a prismatic battery cell, or a battery cell in another shape, and the prismatic battery cell includes but is not limited to a square-housing battery cell, a blade-shaped battery cell, and a polygon prism battery cell, for example, a hexagonal prism battery cell and the like.

A battery mentioned in the embodiments of the present application refers to a single physical module including one or a plurality of battery cells to provide a higher voltage and capacity.

In some embodiments, the battery may be a battery module, and when there are a plurality of battery cells, the plurality of battery cells are arranged and fixed to form a battery module.

In some embodiments, the battery may be a battery pack including a box and a battery cell, and the battery cell or the battery module is accommodated in the box.

In some embodiments, the box may be a part of a chassis structure of a vehicle. For example, a part of the box may be at least a part of a floor of a vehicle, or a part of the box may be at least a part of a cross beam and a side beam of a vehicle.

In some embodiments, the battery may be an energy storage device. The energy storage device includes an energy storage container, an energy storage cabinet, and the like.

The battery has outstanding advantages such as high energy density, low environmental pollution, high power density, a long service life, a wide adaptation range, and a small self-discharge coefficient, and is an important part of development of new energy currently. With rapid development and increase in demands of batteries, requirements of the batteries for use reliability and the like are improved accordingly.

For a common battery cell, a housing of the battery cell generally includes a case and an end cap, and the end cap covers an opening of the case. In order to facilitate assembly of the battery cell, especially in a battery cell of a cylindrical structure, the end cap is generally used as an electric energy output pole of the battery cell. A current collecting member disposed in the housing is connected to a tab of an electrode assembly and the end cap of the housing through welding, to implement an electrical connection between the electrode assembly and the end cap, so as to input or output electric energy of the battery cell. However, in the battery cell of such a structure, the tab of the electrode assembly is generally made of copper, aluminum, or the like, and the current collecting member and the tab are made of the same material, to reduce difficulty in welding the tab and the current collecting member. To improve structural strength of the housing, the housing is generally made of steel or the like, so that the tab of the electrode assembly and the end cap of the housing are made of different materials. Therefore, the current collecting member and the end cap are made of different materials. As a result, welding cracks occur between the current collecting member and the end cap due to difference in melting point and thermal expansion coefficient when the current collecting member and the end cap are connected to each other through welding, resulting in a high risk of electrolyte leakage during use of the battery cell, and further resulting in a high safety risk during use of the battery cell, which is not beneficial to use reliability of the battery cell.

Based on the foregoing considerations, to resolve the problem of low reliability of the battery cell during use, an embodiment of the present application provides a battery cell, where the battery cell includes a housing assembly, an electrode assembly, and a current collecting member. The housing assembly includes an electrode lead-out portion for inputting or outputting electric energy. The electrode assembly is accommodated in the housing assembly, where the electrode assembly includes a body and a tab, the tab is disposed on the body, and a material of the tab is different from that of the electrode lead-out portion. The current collecting member is disposed in the housing assembly, where the current collecting member includes a body portion having a same material as the tab and an additional portion having a same material as the electrode lead-out portion, the body portion is connected to the additional portion, the body portion is connected to the tab through welding, and the additional portion is connected to the electrode lead-out portion through welding.

In the battery cell of such a structure, the current collecting member is disposed as the body portion and the additional portion that are connected to each other, the body portion is connected to the tab through welding, and the additional portion is connected to the electrode lead-out portion of the housing assembly through welding, to implement an electrical connection between the electrode assembly and the electrode lead-out portion, and implement inputting or outputting of electric energy of the battery cell. A material of the body portion is set to be the same as a material of the tab, and a material of the additional portion is set to be the same as a material of the electrode lead-out portion, so that the battery cell of such a structure can facilitate a welding connection between the current collecting member and the electrode lead-out portion and a welding connection between the current collecting member and the tab, and help reduce difficulty in assembling the current collecting member and the electrode lead-out portion and assembling the current collecting member and the tab of the electrode assembly, to improve assembly efficiency of the battery cell. In addition, the current collecting member and the electrode lead-out portion of a same material can be welded to each other, so as to alleviate difference in melting point and thermal expansion coefficient caused by welding of the current collecting member and the electrode lead-out portion with different materials, and reduce welding cracks in the current collecting member and the electrode lead-out portion. This helps reduce a leakage risk of the battery cell, and improve reliability of the battery cell.

The battery cell disclosed in the embodiments of the present application may be, but not limited to, used in an electric device such as a vehicle, a ship, or an aircraft. A power source system including the battery cell, the battery, and the like disclosed in the present application that compose the electric device may be used. This helps alleviate leakage of the electrolyte during use of the battery cell, to improve reliability of the battery cell.

Provided in the embodiments of the present application is an electric device using a battery as a power source. The electric device may be, but is not limited to, a mobile phone, a tablet computer, a notebook computer, an electric toy, an electric tool, a battery-powered vehicle, an electric vehicle, a ship, a spacecraft, etc. The electric toy may include a stationary or mobile electric toy, such as a game machine, an electric car toy, an electric ship toy, an electric airplane toy, and the like, and the spacecraft may be an airplane, a rocket, a space shuttle, a spaceship, etc.

To facilitate description, in the following embodiments, as an example for description, an electric device in an embodiment of the present application is a vehicle 1000.

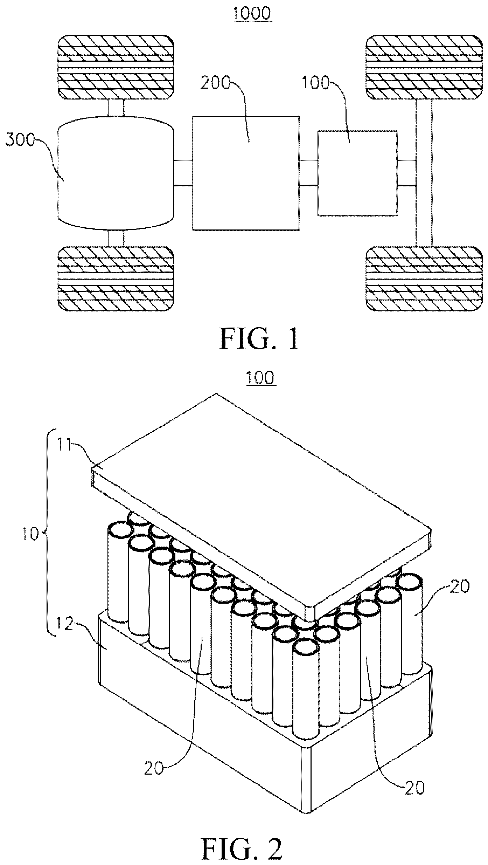

Referring to FIG. 1, FIG. 1 is a schematic diagram of a structure of a vehicle 1000 according to some embodiments of the present application. The vehicle 1000 may be a fuel vehicle, a gas vehicle, or a new energy vehicle, and the new energy vehicle may be a battery electric vehicle, a hybrid vehicle, or a range-extended electric vehicle. A battery 100 is disposed inside the vehicle 1000. The battery 100 may be disposed at the bottom of the vehicle 1000, may be disposed at the head of the vehicle 1000, or may be disposed at the tail of the vehicle 1000. The battery 100 may be used to supply power to the vehicle 1000. For example, the battery 100 may be used as an operating power source or a use power source of the vehicle 1000. The vehicle 1000 may further include a controller 200 and a motor 300, and the controller 200 is used to control the battery 100 to power the motor 300, for example, for a working power requirement for the vehicle 1000 during starting, navigating, and driving the vehicle 1000.

In some embodiments of the present application, the battery 100 may be used not only as the operating power source or the use power source of the vehicle 1000, but also as a driving power source of the vehicle 1000, instead of or partially instead of fuel or natural gas to provide driving power for the vehicle 1000.

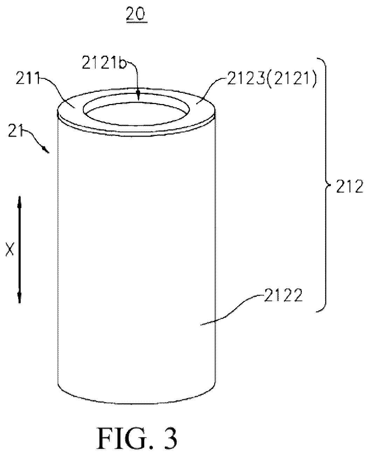

Referring to FIG. 2 and FIG. 3, FIG. 2 is an exploded diagram of a structure of a battery 100 according to some embodiments of the present application, and FIG. 3 is a schematic diagram of a structure of a battery cell 20 according to some embodiments of the present application. The battery 100 includes a box 10 and a battery cell 20. The battery cell 20 is configured to be accommodated in the box 10.

Here, the box 10 is used for providing assembly space for the battery cell 20, and the box 10 may have various structures. In some embodiments, the box 10 may include a first box body 11 and a second box body 12, the first box body 11 and the second box body 12 cover each other, and the first box body 11 and the second box body 12 jointly define the assembly space for accommodating the battery cell 20. The second box body 12 may be of a hollow structure with an opening at one end, the first box body 11 may be of a plate-shaped structure, and the first box body 11 covers an opening side of the second box body 12, so that the first box body 11 and the second box body 12 jointly define the assembly space. Alternatively, the first box body 11 and the second box body 12 each may be of a hollow structure with an opening at one side, and an opening side of the first box body 11 covers an opening side of the second box body 12.

Certainly, the box 10 formed by the first box body 11 and the second box body 12 may be in a plurality of shapes, for example, a cylinder or a cuboid. For example, in FIG. 2, the shape of the box 10 is a cuboid.

In the battery 100, there may be one or a plurality of battery cells 20 disposed in the box 10. When there are a plurality of battery cells 20 disposed in the box 10, the plurality of battery cells 20 may be subjected to series connection, parallel connection, or series-parallel connection, and the series-parallel connection means that the plurality of battery cells 20 are subjected to both series connection and parallel connection. The plurality of battery cells 20 may be subjected to series connection, parallel connection, or series-parallel connection directly, and then an integration formed by the plurality of battery cells 20 is accommodated in the box 10. Certainly, the battery 100 may be alternatively a battery module formed by integrating the plurality of battery cells 20 by series connection, parallel connection, or series-parallel connection, and then a plurality of battery modules are integrated by series connection, parallel connection, or series-parallel connection, and accommodated in the box 10.

In some embodiments, the battery 100 may further include another structure. For example, the battery 100 may further include a current converging component, and the current converging component is configured to connect the plurality of battery cells 20, to implement electrical connections between the plurality of battery cells 20.

Here, each battery cell 20 may be a secondary battery or a primary battery, or may be a lithium-sulfur battery, a sodium-ion battery, or a magnesium-ion battery, but is not limited thereto. The battery cell 20 may be in the shape of cylinder, flat body, rectangular cuboid, etc. For example, in FIG. 3, the battery cell 20 is of a cylindrical structure.

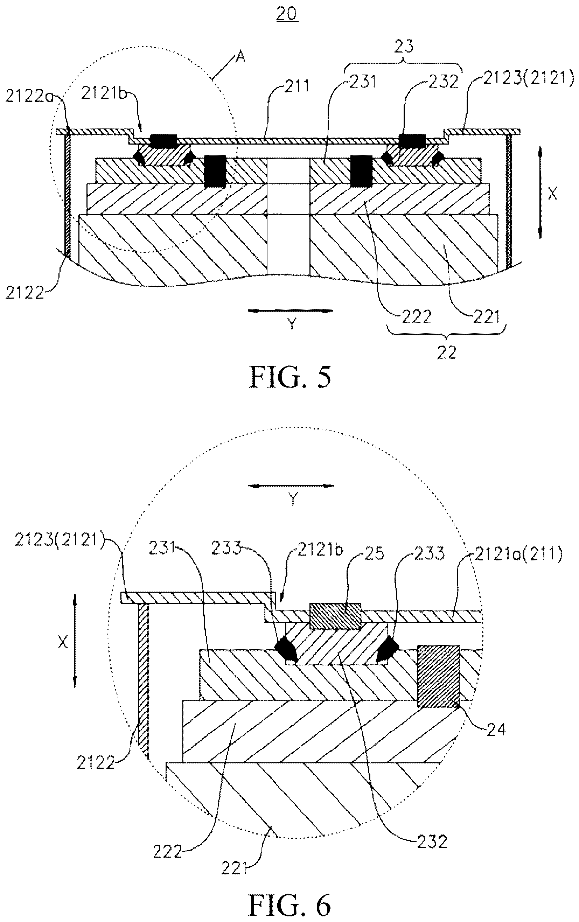

According to some embodiments of the present application, referring to FIG. 3, and further to FIG. 4, FIG. 5, and FIG. 6, FIG. 4 is an exploded diagram of a structure of a battery cell 20, FIG. 5 is a partial cross-sectional view of a battery cell 20 according to some embodiments of the present application, and FIG. 6 is a partial enlarged view of the battery cell 20 shown in FIG. 5 at a position A. Provided in the present application is a battery cell 20. The battery cell 20 includes a housing assembly 21, an electrode assembly 22, and a current collecting member 23. The housing assembly 21 includes an electrode lead-out portion 211 for inputting or outputting electric energy. The electrode assembly 22 is accommodated in the housing assembly 21. The electrode assembly 22 includes a body 221 and a tab 222, the tab 222 is disposed on the body 221, and a material of the tab 222 is different from that of the electrode lead-out portion 211. The current collecting member 23 is disposed in the housing assembly 21. The current collecting member 23 includes a body portion 231 having a same material as that of the tab 222 and an additional portion 232 having a same material as that of the electrode lead-out portion 211, the body portion 231 is connected to the additional portion 232, the body portion 231 is connected to the tab 222 through welding, and the additional portion 232 is connected to the electrode lead-out portion 211 through welding.

Here, the housing assembly 21 includes a housing 212, both the electrode assembly 22 and the current collecting member 23 are accommodated in the housing 212, and the housing 212 may further be used to accommodate an electrolyte, for example, an electrolytic solution. The housing 212 may have a plurality of structural forms such as a cylinder or a cuboid. Similarly, the housing 212 may alternatively be made of a plurality of materials, for example, copper, iron, aluminum, steel, an aluminum alloy, or the like.

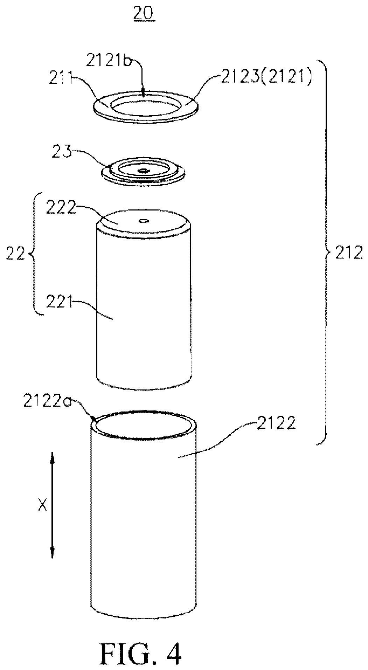

The housing assembly 21 includes the electrode lead-out portion 211 for inputting or outputting electric energy, the electrode lead-out portion 211 functions to be electrically connected to the tab 222 of the electrode assembly 22 to output or input electric energy of the battery cell 20. The electrode lead-out portion 211 may output a positive electrode of the battery cell 20, that is, the electrode lead-out portion 211 may be a positive output pole of the battery cell 20, or may output a negative electrode of the battery cell 20, that is, the electrode lead-out portion 211 may be a negative output pole of the battery cell 20. Similarly, the electrode lead-out portion 211 may have a plurality of structures. The electrode lead-out portion 211 may be a wall portion 2121 of the housing 212, or may be an electrode terminal mounted on the wall portion 2121 of the housing 212. For example, in FIG. 4 and FIG. 5, the electrode lead-out portion 211 is a wall portion 2121 of the housing 212.

In some embodiments, the housing 212 may include a case 2122 and an end cap 2123. An accommodating cavity is formed inside the case 2122, the accommodating cavity is used for accommodating the electrode assembly 22, and the accommodating cavity has an opening 2122a, that is, the case 2122 is of a hollow structure with an opening 2122a at one end. The end cap 2123 covers the opening 2122a of the case 2122 and forms a sealing connection to form sealed space for accommodating the electrode assembly 22 and the electrolyte.

When the battery cell 20 is assembled, the electrode assembly 22 may be first placed in the case 2122, the electrolyte may be filled in the case 2122, and then the end cap 2123 may cover the opening 2122a of the case 2122, to complete the assembly of the battery cell 20.

It should be noted that the wall portion 2121 on which the electrode lead-out portion 211 is mounted or the wall portion 2121 of the electrode lead-out portion 211 may be the end cap 2123 or a wall of the case 2122. For example, in FIG. 4 and FIG. 5, the wall portion 2121 is the end cap 2123. Certainly, the structure of the battery cell 20 is not limited thereto. In another embodiment, the wall portion 2121 may be a bottom wall that is of the case 2122 and that is disposed opposite to the end cap 2123, and the wall portion 2121 may alternatively be a side wall that is of the case 2122 and that is adjacent to and abuts against the end cap 2123.

It should be noted that when the electrode lead-out portion 211 is an electrode terminal mounted on the wall portion 2121 of the housing 212, the electrode lead-out portion 211 is mounted on the housing 212 in an insulated manner. In this case, an output pole, of the battery cell 20, whose polarity is opposite to that of the electrode lead-out portion 211 may be the case 2122 of the housing 212 or the end cap 2123 of the housing 212. When the electrode lead-out portion 211 is the case 2122 of the housing 212, the output pole, of the battery cell 20, whose polarity is opposite to that of the electrode lead-out portion 211 may be an electrode terminal mounted on the wall portion 2121 of the housing 212 in an insulated manner, or may be the end cap 2123 connected to the case 2122 in an insulated manner, or when the electrode lead-out portion 211 is the end cap 2123 of the housing 212, the output pole, of the battery cell 20, whose polarity is opposite to that of the electrode lead-out portion 211 may be an electrode terminal mounted on the wall portion 2121 of the housing 212 in an insulated manner, or may be the case 2122 connected to the end cap 2123 in an insulated manner.

The case 2122 may be in a plurality of shapes such as a cylinder, a cuboid, or a prism structure. The shape of the case 2122 may be determined based on a specific shape of the electrode assembly 22. For example, if the electrode assembly 22 has a cylindrical structure, the case 2122 of the cylindrical structure may be used, and if the electrode assembly 22 has a rectangular structure, the case 2122 of the rectangular structure may be used. Certainly, the end cap 2123 may alternatively have a plurality of structures, for example, the end cap 2123 may have a plate-shaped structure or a hollow structure with an opening at one end. For example, in FIG. 3, the case 2122 is of a cylindrical structure.

Certainly, it may be understood that the housing 212 is not limited to the foregoing structure, and the housing 212 may alternatively have another structure. For example, the housing 212 may include the case 2122 and two end caps 2123, and the case 2122 has a hollow structure with openings 2122a on two opposite sides. One end cap 2123 correspondingly covers one opening 2122a of the case 2122 and forms a sealing connection to form sealed space for accommodating the electrode assembly 22 and the electrolyte. In other words, the openings 2122a are formed on two opposite sides of the case 2122, and the two end caps 2123 respectively cover the two sides of the case 2122 to close the corresponding openings 2122a.

The electrode assembly 22 is a component in the battery cell 20 in which an electrochemical reaction occurs, and the body 221 of the electrode assembly 22 may include a positive plate, a negative plate, and a spacer. The electrode assembly 22 may have a plurality of structures. For example, the body 221 of the electrode assembly 22 may have a winding structure formed by winding the positive plate, the spacer, and the negative plate, or a stacked structure formed by stacking the positive plate, the spacer, and the negative plate. The tab 222 of the electrode assembly 22 is a component formed by stacking and connecting regions in which a positive electrode active substance layer is not coated on the positive plate, or a component formed by stacking and connecting regions in which a negative electrode active substance layer is not coated on the negative plate.

The spacer is a separator, and a main material of the separator may be selected from at least one of glass fiber, non-woven fabrics, polyethylene, polypropylene, and polyvinylidene fluoride.

For example, in FIG. 4, the body 221 of the electrode assembly 22 is a winding structure formed by winding the positive plate, the spacer, and the negative plate, and the body 221 of the electrode assembly 22 is cylindrical.

Each electrode assembly 22 has two tabs 222, and the two tabs 222 have opposite polarities. In other words, the two tabs 222 are respectively used to output or input the positive electrode and the negative electrode of the electrode assembly 22. If the tab 222 is used to output the positive electrode of the electrode assembly 22, the tab 222 is the component formed by stacking and connecting the regions in which the positive electrode active substance layer is not coated on the positive plate. If the tab 222 is used to output the negative electrode of the electrode assembly 22, the tab 222 is the component formed by stacking and connecting the regions in which the negative electrode active substance layer is not coated on the negative plate.

The material of the tab 222 is different from that of the electrode lead-out portion 211, that is, a main component of the tab 222 is different from a main component of the electrode lead-out portion 211. The main component of the tab 222 is a component whose content is 50% or more in a component of the tab 222. Similarly, the main component of the electrode lead-out portion 211 is a component whose content is 50% or more in a component of the electrode lead-out portion 211. The tab 222 may be made of a plurality of materials, for example, copper or aluminum. If the tab 222 is a positive tab 222, the material of the tab 222 is generally aluminum, that is, the main component of the tab 222 is aluminum, and a content is 50% or more. If the tab 222 is a negative tab 222, the material of the tab 222 is generally copper, that is, the main component of the tab 222 is copper, and a content is 50% or more. In other words, that the material of the tab 222 is different from that of the electrode lead-out portion 211 indicates that the main component of the tab 222 is different from the main component of the electrode lead-out portion 211. For example, if the tab 222 and the electrode lead-out portion 211 each are made of a single material, for example, copper or aluminum, the materials of the tab 222 and the electrode lead-out portion 211 are composed of different metal elements. If the tab 222 and the electrode lead-out portion 211 are made of an alloy material or a mixed material, for example, aluminum alloy or steel, that the tab 222 and the electrode lead-out portion 211 are made of different materials means that the main components of the tab 222 and the electrode lead-out portion 211 are different, that is, components whose contents are 50% or more in the alloy material or the mixed material are different.

The current collecting member 23 includes the additional portion 232 having a same material as that of the electrode lead-out portion 211 and the body portion 231 having a same material as that of the tab 222, and the additional portion 232 is connected to the body portion 231, that is, the current collecting member 23 is formed by interconnecting the additional portion 232 and the body portion 231 of different materials, so that an electrical connection is formed between the additional portion 232 and the body portion 231.

Optionally, the electrode lead-out portion 211 may be made of a plurality of materials, for example, copper, iron, aluminum, steel, or an aluminum alloy. For example, in FIG. 5 and FIG. 6, the electrode lead-out portion 211 is a wall portion 2121 of the housing 212, and the material of the housing 212 may be steel. Correspondingly, the material of the additional portion 232 of the current collecting member 23 is the same as that of the housing 212, that is, the material of the additional portion 232 of the current collecting member 23 is also steel. Similarly, if the tab 222 is a positive tab 222, the material of the tab 222 is generally aluminum, and a corresponding material of the body portion 231 of the current collecting member 23 is aluminum. If the tab 222 is a negative tab 222, the material of the tab 222 is generally copper, and a corresponding material of the body portion 231 of the current collecting member 23 is copper.

It should be noted that, that the materials of electrode lead-out portion 211 and the additional portion 232 are the same means that the main component of the electrode lead-out portion 211 is the same as the main component of the additional portion 232, where the main component of the additional portion 232 is a component whose content is 50% or more in a component of the additional portion 232. Similarly, the main component of the electrode lead-out portion 211 is a component whose content is 50% or more in a component of the electrode lead-out portion 211. For example, if the electrode lead-out portion 211 and the additional portion 232 each are made of a single material, for example, copper or aluminum, both the electrode lead-out portion 211 and the additional portion 232 are composed of the same metal element. If the electrode lead-out portion 211 and the additional portion 232 are made of an alloy material or a mixed material, for example, aluminum alloy or steel, that the electrode lead-out portion 211 and the additional portion 232 are made of different materials means that the main components of the electrode lead-out portion 211 and the additional portion 232 are the same, that is, components whose contents are 50% or more in the alloy material or the mixed material are the same. For example, low-carbon steel, medium-carbon steel, and high-carbon steel are all of the same material. Similarly, that the materials of the tab 222 and the body portion 231 are the same means that the main component of the tab 222 is the same as the main component of the body portion 231. For example, if the tab 222 and the body portion 231 each are made of a single material, for example, copper or aluminum, both the tab 222 and the body portion 231 are composed of the same metal element. If the tab 222 and the body portion 231 are made of an alloy material or a mixed material, for example, aluminum alloy or steel, that the tab 222 and the body portion 231 are made of different materials means that the main components of the tab 222 and the body portion 231 are the same, that is, components whose contents are 50% or more in the alloy material or the mixed material are the same. For example, low-carbon steel, medium-carbon steel, and high-carbon steel are all of the same material.

Optionally, there may be a plurality of connection manners between the additional portion 232 and the body portion 231 of the current collecting member 23, for example, clamping, bolting, laser welding connection, plating connection, friction welding connection, ultrasonic connection, or the like. In the current collecting member 23 of such a structure, even when the additional portion 232 and the body portion 231 are made of different materials and are welded to each other to form a welding crack, the welding crack between the additional portion 232 and the body portion 231 is located in the housing 212 of the housing assembly 21 and does not affect the housing 212, thereby reducing a leakage risk.

In some embodiments, the battery cell 20 may further include a pressure relief mechanism, and the pressure relief mechanism is mounted on the housing 212. Optionally, the pressure relief mechanism may be disposed on the end cap 2123 or on the case 2122, and the pressure relief mechanism is configured to relieve pressure inside the battery cell 20 when the internal pressure or temperature of the battery cell 20 reaches a predetermined value.

For example, the pressure relief mechanism may be a pressure relief component such as an explosion-proof valve, an explosion-proof membrane, an air valve, a pressure relief valve, or a safety valve.

The current collecting member 23 is disposed as the body portion 231 and the additional portion 232 that are connected to each other, the body portion 231 is connected to the tab 222 through welding, and the additional portion 232 is connected to the electrode lead-out portion 211 of the housing assembly 21 through welding, to implement an electrical connection between the electrode assembly 22 and the electrode lead-out portion 211, and implement inputting or outputting of electric energy of the battery cell 20. A material of the body portion 231 is set to be the same as a material of the tab 222, and a material of the additional portion 232 is set to be the same as a material of the electrode lead-out portion 211, so that the battery cell 20 of such a structure can facilitate a welding connection between the current collecting member 23 and the electrode lead-out portion 211 and a welding connection between the current collecting member 23 and the tab 222, and help reduce difficulty in assembling the current collecting member 23 and the electrode lead-out portion 211 and assembling the current collecting member 23 and the tab 222 of the electrode assembly 22, to improve assembly efficiency of the battery cell 20. In addition, the current collecting member 23 and the electrode lead-out portion 211 of a same material can be welded to each other, so as to alleviate difference in melting point and thermal expansion coefficient caused by welding of the current collecting member 23 and the electrode lead-out portion 211 with different materials, and reduce welding cracks in the current collecting member 23 and the electrode lead-out portion 211. This helps reduce a leakage risk of the battery cell 20, and improve reliability of the battery cell 20.

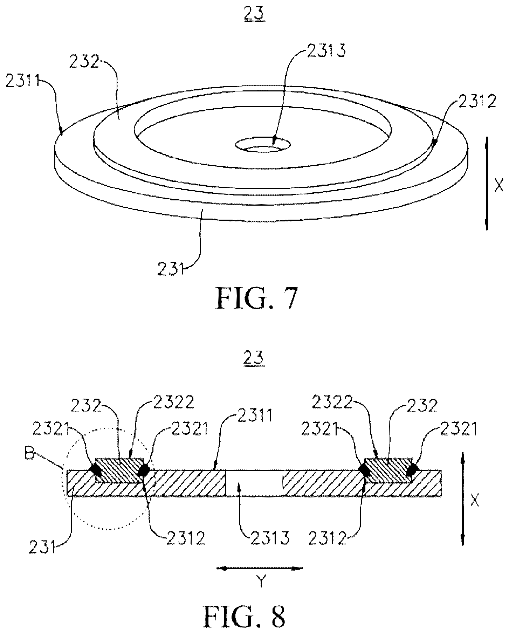

According to some embodiments of the present application, referring to FIG. 6, and further referring to FIG. 7 and FIG. 8, FIG. 7 is a schematic diagram of a structure of the current collecting member 23 according to some embodiments of the present application, and FIG. 8 is a cross-sectional view of the current collecting member 23 according to some embodiments of the present application. At least a part of the current collecting member 23 is disposed between the electrode assembly 22 and the electrode lead-out portion 211 in a first direction X. In the first direction X, the additional portion 232 is connected to a side that is of the body portion 231 and that faces away from the electrode assembly 22.

The first direction X is a thickness direction of the current collecting member 23. Similarly, the first direction X is a thickness direction of the additional portion 232 and a thickness direction of the body portion 231.

In the first direction X, at least a part of the current collecting member 23 is disposed between the electrode assembly 22 and the electrode lead-out portion 211, that is, the electrode assembly 22 and the electrode lead-out portion 211 are arranged in the first direction X, and at least a part of the current collecting member 23 is located between the electrode assembly 22 and the electrode lead-out portion 211. Optionally, the current collecting member 23 may be entirely located between the electrode assembly 22 and the electrode lead-out portion 211, or may be partially located between the electrode assembly 22 and the electrode lead-out portion 211.

The additional portion 232 is connected to the side that is of the body portion 231 and that faces away from the electrode assembly 22. In other words, in the first direction X, the additional portion 232 is disposed on the side that is of the body portion 231 and that faces away from the electrode assembly 22, and a side that is of the body portion 231 and that faces the electrode assembly 22 is closer to the electrode assembly 22 than a side that is of the additional portion 232 and that faces the electrode assembly 22. Optionally, there may be a plurality of structures in which the additional portion 232 is connected to the side that is of the body portion 231 and that faces away from the electrode assembly 22, for example, a structure in which the additional portion 232 and the body portion 231 are stacked in the first direction X and the additional portion 232 is located on a side that is of the body portion 231 and that faces the electrode lead-out portion 211, or a structure in which at least a part of the additional portion 232 is embedded in the body portion 231 from the side that is of the body portion 231 and that faces the electrode lead-out portion 211.

For example, in FIG. 8, a part of the additional portion 232 is embedded in the body portion 231 from the side that is of the body portion 231 and that faces the electrode lead-out portion 211.

At least a part of the current collecting member 23 is disposed between the electrode assembly 22 and the electrode lead-out portion 211, and in the first direction X, the additional portion 232 is disposed on the side that is of the body portion 231 and that faces away from the electrode assembly 22, so that the additional portion 232 and the body portion 231 of the current collecting member 23 are structures arranged in the first direction X, and the additional portion 232 is disposed facing the electrode lead-out portion 211, thereby facilitating mutual welding of the additional portion 232 of the current collecting member 23 and the electrode lead-out portion 211 of the housing assembly 21 and mutual welding of the body portion 231 of the current collecting member 23 and the tab 222 of the electrode assembly 22. This helps reduce difficulty in assembling the electrode lead-out portion 211 and the current collecting member 23 connected to each other and assembling the tab 222 and the current collecting member 23 connected to each other, to improve assembly efficiency of the battery cell 20.

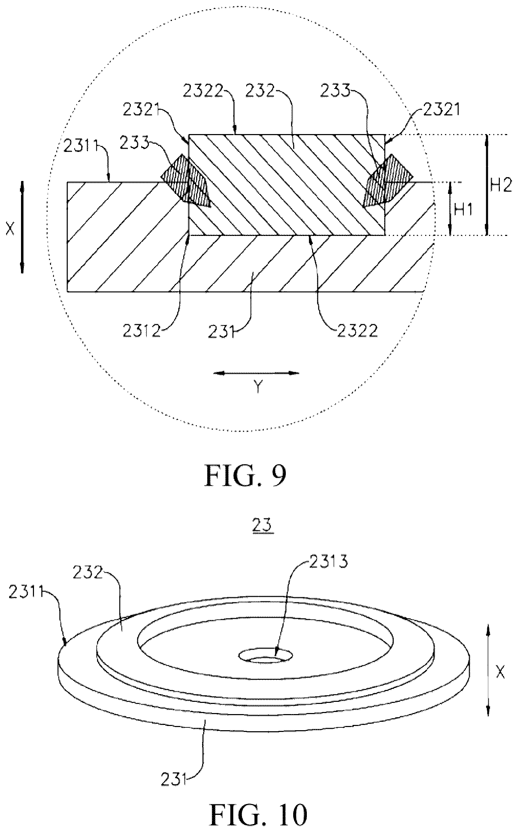

According to some embodiments of the present application, referring to FIG. 7 and FIG. 8, and further referring to FIG. 9, FIG. 9 is a partial enlarged view of the current collecting member 23 shown in FIG. 8 at a position B. In the first direction X, the body portion 231 has a first surface 2311 facing the electrode lead-out portion 211, an accommodating groove 2312 is disposed on the first surface 2311, and at least a part of the addition portion 232 is accommodated in the accommodating groove 2312.

The accommodating groove 2312 is disposed on the first surface 2311, that is, the accommodating groove 2312 is disposed on the side that is of the body portion 231 and that faces the electrode assembly 22 in the first direction X.

Optionally, the accommodating groove 2312 may penetrate the body portion 231 in the first direction X, or may not penetrate the body portion 231 in the first direction X. For example, in FIG. 9, the accommodating groove 2312 does not penetrate the body portion 231 in the first direction X.

At least a part of the additional portion 232 is accommodated in the accommodating groove 2312. In other words, in the first direction X, the entire additional portion 232 may be accommodated in the accommodating groove 2312, or a part of the additional portion 232 may be accommodated in the accommodating groove 2312, and another part may extend out of the accommodating groove 2312.

For example, in FIG. 8, in the first direction X, a part of the additional portion 232 is accommodated in the accommodating groove 2312, and another part protrudes from the first surface 2311.

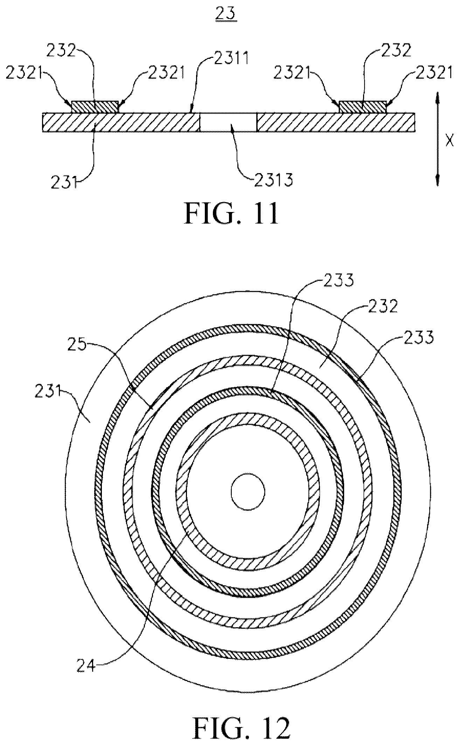

It should be noted that, in some embodiments, the accommodating groove 2312 may not be disposed on the first surface 2311 that is of the body portion 231 and that faces the electrode assembly 22, provided that the additional portion 232 is connected to the first surface 2311. For example, referring to FIG. 10 and FIG. 11, FIG. 10 is a schematic diagram of a structure of the current collecting member 23 according to some other embodiments of the present application, and FIG. 11 is a cross-sectional view of the current collecting member 23 according to some other embodiments of the present application. In the first direction X, the body portion 231 has the first surface 2311 facing the electrode lead-out portion 211, and the additional portion 232 is connected to the first surface 2311, so that the body portion 231 and the additional portion 232 are structures stacked in the first direction X.

The accommodating groove 2312 is disposed on the first surface 2311 that is of the body portion 231 and that faces the electrode lead-out portion 211, and at least a part of the additional portion 232 is accommodated in the accommodating groove 2312 of the body portion 231, so that space occupied by the current collecting member 23 in the first direction X can be reduced, and the weight of the current collecting member 23 can be reduced, thereby facilitating optimization of the weight of the battery cell 20 and the size of the battery cell 20 in the first direction X, to increase the energy density of the battery cell 20.

In some embodiments, referring to FIG. 6, FIG. 7, and FIG. 8, in the first direction X, the additional portion 232 protrudes from the first surface 2311, and a part that is of the additional portion 232 and that protrudes from the first surface 2311 is connected to the electrode lead-out portion 211 through welding.

The part that is of the additional portion 232 and that protrudes from the first surface 2311 is connected to the electrode lead-out portion 211 through welding. In other words, in the first direction X, a part that is of the additional portion 232 and that extends out of the accommodating groove 2312 and the electrode lead-out portion 211 abut against each other, and then are connected through welding.

The additional portion 232 is disposed to protrude from the first surface 2311 of the body portion 231 in the first direction X, that is, the additional portion 232 extends out of the accommodating groove 2312 in the first direction X, so that a part that is of the additional portion 232 and that extends out of the accommodating groove 2312 and the electrode lead-out portion 211 can abut against each other, to reduce occurrence of a gap between the additional portion 232 and the electrode lead-out portion 211 due to interference of the body portion 231. This helps improve a contact effect between the additional portion 232 and the electrode lead-out portion 211, to alleviate a risk of pseudo soldering or poor welding between the additional portion 232 and the electrode lead-out portion 211, and effectively improve a welding effect between the additional portion 232 and the electrode lead-out portion 211.

In FIG. 8, the additional portion 232 has a structure protruding from the first surface 2311 in the first direction X, that is, a structure in which a second surface 2322 that is of the additional portion 232 and that faces the electrode lead-out portion 211 and the first surface 2311 of the body portion 231 are spaced from each other in the first direction X. Certainly, the structure of the current collecting member 23 is not limited thereto. In some embodiments, the current collecting member 23 may have another structure. For example, in the first direction X, the additional portion 232 has the second surface 2322 facing the electrode lead-out portion 211, and the second surface 2322 is flush with the first surface 2311. In other words, in the first direction X, a side that is of the additional portion 232 and that faces the electrode lead-out portion 211 and the side that is of the body portion 231 and that faces the electrode lead-out portion 211 are structures flush with each other.

The second surface 2322 that is of the additional portion 232 and that faces the electrode lead-out portion 211 in the first direction X and the first surface 2311 that is of the body portion 231 and that faces the electrode lead-out portion 211 in the first direction X are disposed to be flush, so that the thickness of the additional portion 232 in the first direction X is the same as the depth of the accommodating groove 2312 in the first direction X. Therefore, space occupied by the current collecting member 23 in the electrode lead-out portion 211 and the electrode assembly 22 can be further optimized while reducing occurrence of a gap between the additional portion 232 and the electrode lead-out portion 211 due to interference of the body portion 231. This helps improve internal space utilization of the battery cell 20, and can increase energy density of the battery cell 20.

According to some embodiments of the present application, referring to FIG. 7 and FIG. 8, the additional portion 232 is of an annular structure. In other words, the additional portion 232 is of an annular structure connected head-to-tail in an extension direction thereof.

The body portion 231 is of a disc structure, and the body portion 231 and the additional portion 232 are coaxially disposed, so that the structure of the current collecting member 23 is more regular, thereby facilitating mounting of the current collecting member 23, and helping save the space occupied by the current collecting member 23 in the housing assembly 21, to improve internal space utilization of the battery cell 20.

It should be noted that, in another embodiment, the additional portion 232 may alternatively be of a disc structure, a strip-shaped structure, an arc-shaped structure, or the like, and the body portion 231 may alternatively be in a rectangular disc structure, a triangular disc structure, an elliptical disc structure, or the like. Similarly, there may be one or a plurality of additional portions 232 disposed on the body portion 231. For example, in FIG. 7, there is one additional portion 232 disposed on the body portion 231.

In some embodiments, a central through hole 2313 penetrating both sides of the body portion 231 in the first direction X is further disposed on the body portion 231, and the central through hole 2313 is used for passing the electrolyte, so that the electrolyte can enter the electrode assembly 22 through the central through hole 2313 in the first direction X, thereby improving an infiltration effect of the electrolyte of the electrode assembly 22.

The additional portion 232 is disposed as an annular structure. This helps increase a welding area between the additional portion 232 and the electrode lead-out portion 211, to improve connection stability between the additional portion 232 and the electrode lead-out portion 211. In addition, overcurrent balance between the current collecting member 23 and the electrode lead-out portion 211 can be improved by using the additional portion 232 in the annular structure. This helps reduce occurrence of a large local overcurrent between the current collecting member 23 and the electrode lead-out portion 211.

In some embodiments, referring to FIG. 7 and FIG. 8, the accommodating groove 2312 is an annular groove extending in an extension direction of the additional portion 232.

The accommodating groove 2312 is an annular groove extending in the extension direction of the additional portion 232, that is, the accommodating groove 2312 is of an annular structure connected head-to-tail in the extension direction thereof, so that the shape of the accommodating groove 2312 matches the shape of the additional portion 232.

The accommodating groove 2312 is disposed in the annular groove in a direction the same as the extension direction of the additional portion 232, so that the additional portion 232 is accommodated in the accommodating groove 2312, and a certain limiting and locating function can be performed on the additional portion 232. This helps reduce difficulty in assembling the additional portion 232 and the body portion 231. In addition, only the annular accommodating groove 2312 that matches the shape of the additional portion 232 needs to be disposed on the first surface 2311. This helps reduce difficulty in processing the accommodating groove 2312 and reduce a processing range of the accommodating groove 2312.

The structure of the current collecting member 23 is not limited thereto. In another embodiment, the current collecting member 23 may be in another structure. For example, the current collecting member 23 may include a plurality of additional portions 232, the plurality of additional portions 232 each are connected to the body portion 231, and in the first direction X, projections of the plurality of additional portions 232 in a plane perpendicular to the first direction X do not overlap each other.

In the first direction X, the projections of the plurality of additional portions 232 in the plane perpendicular to the first direction X do not overlap each other. In other words, the plurality of additional portions 232 are spaced apart in the plane perpendicular to the first direction X. For example, if the additional portions 232 are of an annular structure, the plurality of additional portions 232 have structures that surround each other in a radial direction of the current collecting member 23 and that are spaced apart. If the additional portions 232 is in a strip-shaped structure, the plurality of additional portions 232 have structures spaced apart in a direction perpendicular to the first direction X.

The plurality of additional portions 232 are disposed on the current collecting member 23, the plurality of additional portions 232 each are connected to a side that is of the body portion 231 and that faces away from the electrode assembly 22, and projections of the plurality of additional portions 232 in the first direction X do not overlap, so that overcurrent efficiency between the current collecting member 23 and the electrode lead-out portion 211 can be improved after the plurality of additional portions 232 each are connected to the electrode lead-out portion 211 through welding.

According to some embodiments of the present application, the body portion 231 is connected to the additional portion 232 through welding.

A welding manner between the body portion 231 and the additional portion 232 may be laser welding connection, plating connection, friction welding connection, ultrasonic connection, or the like. Similarly, the additional portion 232 and the body portion 231 may alternatively be welded at a plurality of positions. For example, penetration welding may be performed in the first direction X on a region in which the additional portion 232 and the body portion 231 are stacked on each other, or a side surface of the additional portion 232 and the body portion 231 may be connected through fillet welding.

The body portion 231 and the additional portion 232 are connected through welding, so that strength and stability of connection between the additional portion 232 and the body portion 231 can be effectively improved, to reduce occurrence of separating the additional portion 232 from the body portion 231 during use. This helps improve overcurrent stability between the additional portion 232 and the body portion 231, and effectively improve use stability of the battery cell 20.

According to some embodiments of the present application, referring to FIG. 6, FIG. 8, and FIG. 9, the current collecting member 23 is disposed between the electrode assembly 22 and the electrode lead-out portion 211 in the first direction X. In the first direction X, the body portion 231 has the first surface 2311 facing the electrode lead-out portion 211, in a second direction Y, the additional portion 232 has a first side surface 2321, the first side surface 2321 is connected to the first surface 2311 through welding, and the second direction Y is perpendicular to the first direction X.

In the second direction Y, the additional portion 232 has the first side surface 2321, and the first side surface 2321 is connected to the first surface 2311 through welding. In other words, a side surface of the additional portion 232 in the second direction Y perpendicular to the first direction X is connected to the first surface 2311 of the body portion 231 through welding, so that the additional portion 232 and the body portion 231 are connected to each other through fillet welding.

In FIG. 9, the additional portion 232 has two second surfaces 2322 disposed opposite to each other in the first direction X. In other words, two second surfaces 2322 are formed on two sides of the additional portion 232 in the thickness direction of the additional portion 232, one first surface 2311 that is in the two first surfaces 2311 and that is close to the electrode lead-out portion 211 in the first direction X is configured to be connected to the electrode lead-out portion 211 through welding, so that the additional portion 232 is connected to the electrode lead-out portion 211 through welding, and the two second surfaces 2322 are connected by using the first side surface 2321. It should be noted that, in an embodiment in which the accommodating groove 2312 is disposed on the body portion 231, one second surface 2322 in the two second surfaces 2322 and a groove bottom surface of the accommodating groove 2312 abut against each other, and the other second surface 2322 is connected to the electrode lead-out portion 211 through welding.

Optionally, there may be a plurality of types of included angles formed between the first side surface 2321 and the first surface 2311. For example, in FIG. 9, the first side surface 2321 and the first surface 2311 are perpendicular to each other, that is, the first side surface 2321 and the first direction X are parallel to each other. This structure helps improve welding quality between the first surface 2311 and the first side surface 2321. Certainly, in another embodiment, the first side surface 2321 may alternatively be disposed at an included angle with the first direction X, that is, the first side surface 2321 is an inclined structure.

It should be noted that in FIG. 7 and FIG. 8, because the additional portion 232 has an annular structure, the first side surface 2321 may be an inner circumferential surface of the additional portion 232 or an outer circumferential surface of the additional portion 232. Certainly, in another embodiment, if the additional portion 232 has a strip-shaped structure, an arc-shaped structure, or the like, the first side surface 2321 is any side surface of the additional portion 232 in a direction perpendicular to the first direction X.

The first surface 2311 of the body portion 231 in the first direction X and the first side surface 2321 of the additional portion 232 in the second direction Y are connected to each other through welding, so that the body portion 231 and the additional portion 232 are connected to each other through fillet welding, to implement the welding connection between the body portion 231 and the additional portion 232. When the current collecting member 23 of such a structure is used, a larger depth of fusion can be obtained at a lower welding power. This helps improve a welding effect between the additional portion 232 and the body portion 231, and effectively improve stability of connection between the additional portion 232 and the body portion 231. In addition, a welding mark formed by welding between the additional portion 232 and the body portion 231 can be located on a side of the additional portion 232 in the second direction Y, thereby reducing interference of the welding mark formed by mutual welding between the additional portion 232 and the body portion 231 on mutual abutting and welding connection of the additional portion 232 and the electrode lead-out portion 211 in the first direction X. This helps improve a contact effect of the additional portion 232 and the electrode lead-out portion 211, to alleviate a risk of pseudo soldering or poor welding between the additional portion 232 and the electrode lead-out portion 211, and effectively improve welding quality between the additional portion 232 and the electrode lead-out portion 211.

In some embodiments, referring to FIG. 8 and FIG. 9, in the second direction Y, the additional portion 232 has two first side surfaces 2321 disposed opposite each other, and the two first side surfaces 2321 each are connected to the first surface 2311 through welding.

The two first side surfaces 2321 are connected to the first surface 2311 through welding. In other words, two sides of the additional portion 232 in the second direction Y are connected to the body portion 231 through welding.

The two opposing first side surfaces 2321 of the additional portion 232 in the second direction Y each are welded to the first surface 2311, so that strength and stability of connection between the additional portion 232 and the body portion 231 are improved, and overcurrent efficiency between the additional portion 232 and the body portion 231 can be improved.

In some embodiments, still referring to FIG. 8 and FIG. 9, the additional portion 232 is of an annular structure, and the two first side surfaces 2321 are respectively of an inner circumferential surface and an outer circumferential surface of the additional portion 232.

The additional portion 232 is disposed as an annular structure, and both the inner circumferential surface and the outer circumferential surface of the additional portion 232 are welded to the first surface 2311 of the body portion 231. This helps increase a welding area between the additional portion 232 and the body portion 231, to further improve stability of connection between the additional portion 232 and the body portion 231, and can improve overcurrent balance between the additional portion 232 and the body portion 231, to help reduce occurrence of a large local overcurrent between the additional portion 232 and the body portion 231.

According to some embodiments of the present application, referring to FIG. 9, the two first side surfaces 2321 each are connected to the first surface 2311 through welding to form two first welding portions 233, where projections of the two first welding portions 233 in a plane perpendicular to the first direction X do not overlap.

The projections of the two first welding portions 233 in the plane perpendicular to the first direction X do not overlap, that is, the two first welding portions 233 are staggered in the first direction X. In other words, the two first welding portions 233 are spaced apart in the plane perpendicular to the first direction X.

The projections, in the first direction Y, of the two first welding portions 233 formed by mutual welding between the two first side surfaces 2321 of the additional portion 232 and the first surface 2311 of the body portion 231 are disposed to not overlap each other, so that the two first welding portions 233 are structures mutually staggered in the first direction X, thereby reducing occurrence of weld pool penetration between the two first welding portions 233. This helps improve welding quality between the additional portion 232 and the body portion 231.

According to some embodiments of the present application, referring to FIG. 8 and FIG. 9, the accommodating groove 2312 for accommodating the additional portion 232 is disposed on the first surface 2311, and the additional portion 232 protrudes from the first surface 2311 in the first direction X, so that the first side surface 2321 extends to the outside of the accommodating groove 2312.

In the first direction X, the additional portion 232 protrudes from the first surface 2311, so that the first side surface 2321 extends to the outside of the accommodating groove 2312, that is, the additional portion 232 extends out of the accommodating groove 2312 in the first direction X, so that a part of the first side surface 2321 of the additional portion 232 is located in the accommodating groove 2312 in the first direction X, and another part is located outside the accommodating groove 2312 in the first direction X. In other words, one second surface 2322 in the two second surfaces 2322 connected to the first side surface 2321 is located in the accommodating groove 2312, and the other second surface 2322 is located outside the accommodating groove 2312 and is connected to the electrode lead-out portion 211 through welding.

The accommodating groove 2312 for accommodating the additional portion 232 is disposed on the first surface 2311 that is of the body portion 231 and that faces the electrode lead-out portion 211, and the additional portion 232 protrudes from the first surface 2311 in the first direction X, so that the first side surface 2321 can extend from the inside of the accommodating groove 2312 to the outside of the accommodating groove 2312. When the current collecting member 23 of such a structure is used, the space occupied by the current collecting member 23 in the first direction X can be reduced, and the weight of the current collecting member 23 can be reduced, thereby facilitating optimization of the weight of the battery cell 20 and the size of the battery cell 20 in the first direction X, to increase the energy density of the battery cell 20. In addition, a part of the first side surface 2321 is in the accommodating groove 2312, and the other part is outside the accommodating groove 2312, that is, both sides of the first surface 2311 in the first direction X have the first side surface 2321, thereby improving a welding effect between the first surface 2311 and the first side surface 2321, to improve welding quality between the additional portion 232 and the body portion 231.

In some embodiments, referring to FIG. 9, in the first direction X, the groove depth of the accommodating groove 2312 is H₁, and the thickness of the additional portion 232 is H₂, which satisfy H₂ - H₁ ≥ 0.2 H₂.

H₂ - H₁ ≥ 0.2 H₂, that is, a difference of the thickness of the additional portion 232 in the first direction X minus the groove depth of the accommodating groove 2312 in the first direction X is greater than or equal to 0.2 times the thickness of the additional portion 232 in the first direction X. In other words, the size of a part that is of the additional portion 232 and that protrudes from the first surface 2311 in the first direction X is greater than or equal to 0.2 times the thickness of the additional portion 232 in the first direction X. Similarly, in other words, the distance in the first direction X between the first surface 2311 and the second surface 2322 that is in the two second surfaces 2322 and that is located outside the accommodating groove 2312 is greater than or equal to 0.2 times the thickness of the additional portion 232 in the first direction X.

For example, H₂ - H₁ may be 0.2 times, 0.22 times, 0.25 times, 0.3 times, 0.35 times, 0.4 times, 0.5 times, 0.6 times, 0.7 times, 0.8 times, or 1 time H₂.

A difference between the thickness of the additional portion 232 in the first direction X and the groove depth of the accommodating groove 2312 in the first direction X is set to be greater than or equal to 0.2 times the thickness of the additional portion 232 in the first direction X, that is, a size of the part that is of the additional portion 232 and that protrudes from the first surface 2311 in the first direction X is greater than or equal to 0.2 times the thickness of the additional portion 232 in the first direction X. This helps alleviate a case in which a welding mark formed by mutual welding between the first surface 2311 and the first side surface 2321 exceed a side that is of the additional portion 232 and that faces the electrode lead-out portion 211 in the first direction X, and effectively reduce a risk that the additional portion 232 and the electrode lead-out portion 211 are in poor contact or cannot be contacted due to interference caused by mutual welding formed between the additional portion 232 and the electrode lead-out portion 231, to alleviate pseudo soldering or poor welding between the additional portion 232 and the electrode lead-out portion 211, and effectively improve welding quality between the additional portion 232 and the electrode lead-out portion 211.

In some embodiments, still referring to FIG. 9, the first side surface 2321 abuts against a groove side surface of the accommodating groove 2312.

Before the additional portion 232 and the body portion 231 are connected to each other through welding, the first surface 2311 and the groove side surface of the accommodating groove 2312 are connected to each other. The first side surface 2321 abuts against a groove bottom surface of the accommodating groove 2312, so that edges of the first side surface 2321 and the first surface 2311 can abut against each other.

The accommodating groove 2312 is disposed on the first surface 2311, and the first side surface 2321 and the groove side surface of the accommodating groove 2312 abut against each other, so that a gap between the first side surface 2321 and the first surface 2311 can be reduced. This helps improve welding quality between the first side surface 2321 and the first surface 2311.

According to some embodiments of the present application, referring to FIG. 5 and FIG. 6, the additional portion 232 is connected to the body portion 231 through welding to form at least one first welding portion 233, and the body portion 231 is connected to the tab 222 through welding to form at least one second welding portion 24. Projections of the at least one first welding portion 233 and the at least one second welding portion 24 in a plane perpendicular to the first direction X do not overlap.

The projections of the at least one first welding portion 233 and the at least one second welding portion 24 in the plane perpendicular to the first direction X do not overlap, that is, a projection of any one first welding portion 233 in the first direction X and a projection of any one second welding portion 24 in the first direction X do not intersect with each other. In other words, the projection of any one first welding portion 233 in the plane perpendicular to the first direction X and the projection of any one second welding portion 24 in the plane perpendicular to the first direction X are spaced apart.

Optionally, the body portion 231 and the tab 222 are welded to each other and form an electrical connection, and the second welding portion 24 formed by the welding connection between the body portion 231 and the tab 222 may be located outside the additional portion 232 or inside the additional portion 232. Similarly, there may be one or a plurality of second welding portions 24 formed by the welding connection between the body portion 231 and the tab 222. When there are a plurality of second welding portions 24, the plurality of second welding portions 24 may all be located on an inner side or an outer side of the additional portion 232, or the second welding portions 24 may be disposed on both an inner side and an outer side of the additional portion 232.

Projections, in the first direction X, of the first welding portion 233 formed by welding the additional portion 232 and the body portion 231 and the second welding portion 24 formed by welding the body portion 231 and the tab 222 are disposed to not overlap each other, so that the first welding portion 233 and the second welding portion 24 are structures mutually staggered in the first direction X, thereby reducing occurrence of a weld pool between the first welding portion 233 and the second welding portion 24. This helps improve welding quality between the additional portion 232 and the body portion 231 and between the body portion 231 and the tab 222.

In some embodiments, still referring to FIG. 5 and FIG. 6, the additional portion 232 surrounds an outer side of the second welding portion 24. In other words, the additional portion 232 has an annular structure, and the additional portion 232 surrounds the outer side of the second welding portion 24. Certainly, in another embodiment, the second welding portion 24 may be located on the outer side of the additional portion 232.

The additional portion 232 is disposed as a structure around the outer side of the second welding portion 24 formed by welding the body portion 231 and the tab 222, that is, the second welding portion 24 formed by welding the body portion 231 and the tab 222 is located on an inner circumferential side of the additional portion 232. This helps shorten an overcurrent path between the tab 222 and the current collecting member 23.

The structure of the battery cell 20 is not limited thereto. In another embodiment, the battery cell 20 may have another structure. For example, the at least one second welding portion 24 includes two second welding portions 24, the additional portion 232 surrounds the outer side of one second welding portion 24, and the other second welding portion 24 surrounds the outer side of the additional portion 232.

Two second welding portions 24 are formed by welding the body portion 231 and the tab 222, one second welding portion 24 in the two second welding portions 24 is located on an inner circumferential side of the additional portion 232, and the other second welding portion 24 is located on an outer circumferential side of the additional portion 232, thereby helping further improve overcurrent efficiency between the tab 222 and the current collecting member 23.

According to some embodiments of the present application, referring to FIG. 5 and FIG. 6, the additional portion 232 is connected to the body portion 231 through welding to form at least one first welding portion 233, and the additional portion 232 is connected to the electrode lead-out portion 211 through welding to form at least one third welding portion 25. Projections of the at least one first welding portion 233 and the at least one third welding portion 25 in a plane perpendicular to the first direction X do not overlap.

The projections of the at least one first welding portion 233 and the at least one third welding portion 25 in the plane perpendicular to the first direction X do not overlap, that is, the projection of any one first welding portion 233 in the first direction X and the projection of any one third welding portion 25 in the first direction X do not intersect with each other. In other words, the projection of any one first welding portion 233 in the plane perpendicular to the first direction X and the projection of any one third welding portion 25 in the plane perpendicular to the first direction X are spaced apart.

For example, there is one third welding portion 25.

It should be noted that, referring to FIG. 6 and FIG. 9, in an embodiment in which the first side surface 2321 of the additional portion 232 is connected to the first surface 2311 of the body portion 231 through fillet welding, the first welding portion 233 may be located on the inner side of the second welding portion 24, or may be located on the outer side of the second welding portion 24. In an embodiment in which the first side surface 2321 of the additional portion 232 is connected to the first surface 2311 of the body portion 231 through fillet welding to form two first welding portions 233, the two first welding portions 233 are located on both sides of the second welding portion 24 in the second direction Y. In other words, in the second direction Y, the second welding portion 24 is located between the two first welding portions 233 and is spaced apart from the two first welding portions 233.

Projections, in the first direction X, of the first welding portion 233 formed by welding the additional portion 232 and the body portion 231 and the third welding portion 25 formed by welding the additional portion 232 and the electrode lead-out portion 211 are disposed to not overlap each other, so that the first welding portion 233 and the third welding portion 25 are structures mutually staggered in the first direction X, thereby reducing occurrence of a weld pool between the first welding portion 233 and the third welding portion 25. This helps improve welding quality between the additional portion 232 and the body portion 231 and between the additional portion 232 and the electrode lead-out portion 211.

According to some embodiments of the present application, referring to FIG. 5 and FIG. 6, the third welding portion 25 penetrates the electrode lead-out portion 211 in the first direction X. In other words, the third welding portion 25 penetrates both sides of the electrode lead-out portion 211 in the first direction X.

The third welding portion 25 is disposed as a structure that penetrates the electrode lead-out portion 211 in the first direction X, so that reliability of connection between the additional portion 232 and the electrode lead-out portion 211 can be improved, and the additional portion 232 and the electrode lead-out portion 211 can be easily welded from the outside of the electrode lead-out portion 211. This helps reduce welding difficulty.

In some embodiments, the third welding portion 25 is configured to be formed by irradiating a laser from a side that is of the electrode lead-out portion 211 and that faces away from the electrode assembly 22 to melt at least parts of the electrode lead-out portion 211 and the additional portion 232. That is, the third welding portion 25 is formed by welding the electrode lead-out portion 211 and the additional portion 232 by using a laser, and the laser is irradiated from the side that is of the electrode lead-out portion 211 and that faces away from the additional portion 232.

The third welding portion 25 is formed through welding by irradiating the laser outside the electrode lead-out portion 211. This helps reduce difficulty in welding the additional portion 232 and the electrode lead-out portion 211, to improve assembly efficiency of the battery cell 20.

In some embodiments, still referring to FIG. 6, the third welding portion 25 does not penetrate the additional portion 232 in the first direction X. In other words, in the first direction X, the third welding portion 25 does not penetrate the side that is of the additional portion 232 and that faces away from the electrode lead-out portion 211.

The third welding portion 25 is disposed as a structure that does not penetrate the additional portion 232 in the first direction X, so that welding power required for welding the additional portion 232 and the electrode lead-out portion 211 can be reduced, which helps reduce welding difficulty, and adverse impact on the body portion 231 and the tab 222 because the third welding portion 25 penetrates the additional portion can be reduced.

According to some embodiments of the present application, referring to FIG. 5 and FIG. 6, and referring to FIG. 12, FIG. 12 is a schematic diagram of welding the current collecting member 23 and the tab 222, and welding the current collecting member 23 and the electrode lead-out portion 211 according to some embodiments of the present application. The additional portion 232 is connected to the body portion 231 through welding to form the at least one first welding portion 233, the body portion 231 is connected to the tab 222 through welding to form the at least one second welding portion 24, and the additional portion 232 is connected to the electrode lead-out portion 211 through welding to form the at least one third welding portion 25.

A projected area of the at least one first welding portion 233 in a plane perpendicular to the first direction X is S₁, a projected area of the at least one second welding portion 24 in a plane perpendicular to the first direction X is S₂, and a projected area of the at least one third welding portion 25 in a plane perpendicular to the first direction X is S₃, which satisfy 0.8 ≤ S₁/S₂ ≤ 1.2, and/or 0.8 ≤ S₁/S₃ ≤ 1.2, and/or 0.8 ≤ S₂/S₃ ≤ 1.2. That is, a sum of all the projected areas of the first welding portion 233 in the plane perpendicular to the first direction X is S₁, a sum of all the projected areas of the second welding portion 24 in the plane perpendicular to the first direction X is S₂, and a sum of all the projected areas of the third welding portion 25 in the plane perpendicular to the first direction X is S₃.

Preferably, the projected area of the at least one first welding portion 233 in the plane perpendicular to the first direction X, the projected area of the at least one second welding portion 24 in the plane perpendicular to the first direction X, and the projected area of the at least one third welding portion 25 in the plane perpendicular to the first direction X are equal.

A ratio between the projected area of the at least one first welding portion 233 in the plane perpendicular to the first direction X, the projected area of the at least one second welding portion 24 in the plane perpendicular to the first direction X, and the projected area of the at least one third welding portion 25 in the plane perpendicular to the first direction X is set to 0.8 to 1.2, so that the projected area of the at least one first welding portion 233 in the plane perpendicular to the first direction X, the projected area of the at least one second welding portion 24 in the plane perpendicular to the first direction X, and the projected area of the at least one third welding portion 25 in the plane perpendicular to the first direction X are close to each other. In this way, a bottleneck or a limitation on an overall overcurrent capacity caused by an excessively small projected area of one of the first welding portion 233, the second welding portion 24, and the third welding portion 25 in the first direction can be alleviated, and an excess local overcurrent capacity caused by an excessively large projected area of one of the first welding portion 233, the second welding portion 24, and the third welding portion 25 in the first direction X can be alleviated. Therefore, unnecessary waste can be reduced, and production costs of the battery cell 20 can be reduced.

According to some embodiments of the present application, referring to FIG. 12, the additional portion 232 is connected to the body portion 231 through welding to form at least one first welding portion 233, and the first welding portion 233 has an annular structure. In addition/alternatively, the additional portion 232 has an annular structure, the additional portion 232 is connected to the electrode lead-out portion 211 through welding to form at least one second welding portion 24, and the second welding portion 24 has an annular structure. In addition/alternatively, the body portion 231 is connected to the tab 222 through welding to form at least one third welding portion 25, and the third welding portion 25 has an annular structure.

The first welding portion 233 has an annular structure, that is, the first welding portion 233 has a cyclic shape connected head-to-tail in the extension direction thereof. Similarly, the second welding portion 24 has an annular structure, that is, the second welding portion 24 has a cyclic shape connected head-to-tail in the extension direction thereof, and the third welding portion 25 has an annular structure, that is, the third welding portion 25 has a cyclic shape connected head-to-tail in the extension direction thereof.

For example, in FIG. 12, the first welding portion 233, the second welding portion 24, and the third welding portion 25 each have an annular structure. Certainly, in another embodiment, the first welding portion 233, the second welding portion 24, and the third welding portion 25 may alternatively have a strip-shaped structure, an arc-shaped structure, or an annular discontinuous structure. Similarly, the first welding portion 233, the second welding portion 24, and the third welding portion 25 may have a radially-shaped structure that includes a plurality of welding marks. For example, the plurality of welding marks are spaced apart in a circumferential direction of the current collecting member 23, and each welding mark extends in a radial direction of the current collecting member 23.

The first welding portion 233 formed by mutual welding between the additional portion 232 and the body portion 231 is disposed as an annular structure. This helps improve stability of connection between the additional portion 232 and the body portion 231, and increase an overcurrent area and improve overcurrent balance between the additional portion 232 and the body portion 231, to improve an overcurrent effect between the additional portion 232 and the body portion 231. Similarly, the second welding portion 24 formed by mutual welding between the additional portion 232 and the electrode lead-out portion 211 is disposed as an annular structure. This helps improve stability of connection between the additional portion 232 and the electrode lead-out portion 211, and increase an overcurrent area and improve overcurrent balance between the additional portion 232 and the electrode lead-out portion 211, to improve an overcurrent effect between the additional portion 232 and the electrode lead-out portion 211. Similarly, the third welding portion 25 formed by mutual welding between the body portion 231 and the tab 222 is disposed as an annular structure. This helps improve the connection stability between the body portion 231 and the tab 222, and increase the overcurrent area and improve the overcurrent balance between the body portion 231 and the tab 222, to improve an overcurrent effect between the body portion 231 and the tab 222.

According to some embodiments of the present application, referring to FIG. 4, FIG. 5, and FIG. 6, the tab 222 is disposed at an end that is of the body 221 and that faces the body portion 231.

The tab 222 is disposed at the end that is of the body 221 and that faces the body portion 231, that is, the tab 222 is connected to an end that is of the body 221 and that is close to the electrode lead-out portion 211 in the first direction X. In other words, the tab 222 is formed at an end that is of the electrode assembly 22 and that is close to the electrode lead-out portion 211 in the first direction X, so that the tab 222 is located between the body 221 and the body portion 231 in the first direction X.

The tab 222 is disposed at the side that is of the body 221 and that faces the body portion 231 of the current collecting member 23 in the first direction X, so that the tab 222 and the body portion 231 are disposed facing each other in the first direction X, and the body portion 231 of the current collecting member 23 and the tab 222 of the electrode assembly 22 are connected to each other through welding. This helps reduce difficulty in assembling the current collecting member 23 and the tab 222.

In some embodiments, referring to FIG. 4 and FIG. 5, the body 221 is cylindrical.

A central axis of the body 221 extends in the first direction X.

The body 221 of the electrode assembly 22 is disposed as a cylindrical structure so as to be processed subsequently to form a battery cell 20 having a cylindrical structure, so that the battery cell 20 has advantages of high capacity, long cycle life, a wide operating environment temperature, and the like.

According to some embodiments of the present application, referring to FIG. 3, FIG. 4, FIG. 5, and FIG. 6, the housing assembly 21 may include the housing 212, the electrode assembly 22 is accommodated in the housing 212, the housing 212 has the wall portion 2121, and the wall portion 2121 is the electrode lead-out portion 211.

Here, the wall portion 2121 is the electrode lead-out portion 211. In other words, the additional portion 232 of the current collecting member 23 is connected to one wall of the housing 212 through welding to input or output electric energy of the battery cell 20.

The housing 212 is disposed on the housing assembly 21. The wall portion 2121 of the housing 212 is used as the electrode lead-out portion 211, so that the tab 222 is connected to the wall portion 2121 of the housing 212 via the current collecting member 23 to implement inputting or outputting of electric energy of the battery cell 20, which has a simple structure and is easy to assemble.

According to some embodiments of the present application, referring to FIG. 5 and FIG. 6, a convex portion 2121a is formed on a side that is of the wall portion 2121 and that faces the electrode assembly 22, and the convex portion 2121a is connected to the additional portion 232 through welding.

The convex portion 2121a is formed on the side that is of the wall portion 2121 and that faces the electrode assembly 22. In other words, in the first direction X, a protrusion protruding toward the electrode assembly 22 is formed on the side that is of the wall portion 2121 and that faces the electrode assembly 22.

It should be noted that, in an embodiment in which the additional portion 232 is connected to the body portion 231 through welding to form the first welding portion 233, and the additional portion 232 is connected to the electrode lead-out portion 211 through welding to form the second welding portion 24, the convex portion 2121a is connected to the additional portion 232 through welding. In other words, the convex portion 2121a of the wall portion 2121 is the electrode lead-out portion 211, and the convex portion 2121a is connected to the additional portion 232 through welding to form the second welding portion 24.

The convex portion 2121a is formed on the side that is of the wall portion 2121 and that faces the electrode assembly 22, and the convex portion 2121a is connected to the additional portion 232 of the current collecting member 23 through welding, to implement a welding connection between the additional portion 232 and the wall portion 2121. In the battery cell 20 of such a structure, the wall portion 2121 and the additional portion 232 of the current collecting member 23 abut against each other via the convex portion 2121a, and then are connected through welding. This helps reduce difficulty in welding the additional portion 232 and the wall portion 2121.

In some embodiments, referring to FIG. 4, FIG. 5, and FIG. 6, a groove 2121b is formed at a side that is of the wall portion 2121 and that faces away from the electrode assembly 22 and at a position corresponding to the convex portion 2121a.

For example, the wall portion 2121 is formed through stamping to form the convex portion 2121a and the groove 2121b respectively on both sides of the wall portion 2121 in the first direction X. Certainly, in another embodiment, the wall portion 2121 may be formed by a process such as casting.

The groove 2121b is formed at the side that is of the wall portion 2121 and that faces away from the electrode assembly 22 and at the position corresponding to the convex portion 2121a, so that the wall portion 2121 is in a concavo-convex structure formed through stamping, and the convex portion 2121a and the groove 2121b are formed on both sides of the wall portion 2121, respectively. This helps reduce processing difficulty to improve processing efficiency. In addition, the wall portion 2121 of such a structure can be used to effectively improve structural strength of the wall portion 2121 to alleviate deformation occurring when the wall portion 2121 and the additional portion 232 are connected to each other through welding, thereby helping improve production quality of the battery cell 20.

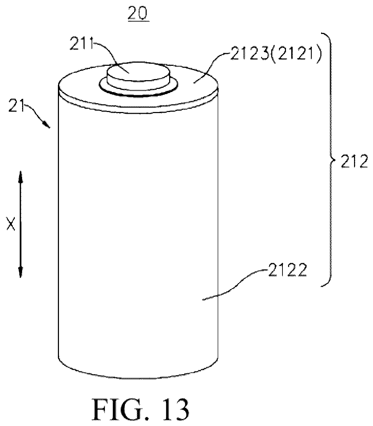

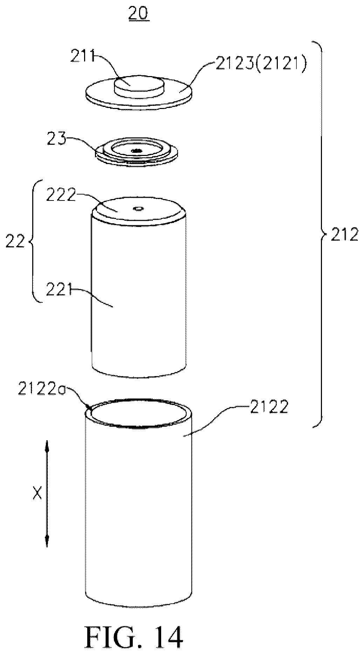

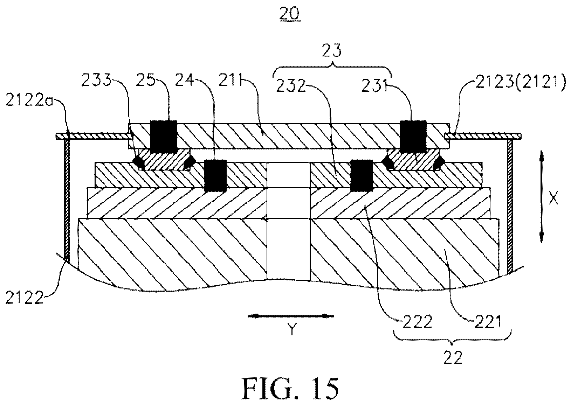

According to some embodiments of the present application, referring to FIG. 13, FIG. 14, and FIG. 15, FIG. 13 is a schematic diagram of a structure of the battery cell 20 according to some other embodiments of the present application, FIG. 14 is an exploded diagram of a structure of the battery cell 20 according to some other embodiments of the present application, and FIG. 15 is a partial cross-sectional view of the battery cell 20 according to some other embodiments of the present application. The housing assembly 21 may further include a housing 212, and the electrode assembly 22 is accommodated in the housing 212. The housing 212 has a wall portion 2121, and the electrode lead-out portion 211 is mounted on the wall portion 2121 in an insulated manner.

Here, the housing 212 has the wall portion 2121, and the electrode lead-out portion 211 is mounted on the wall portion 2121 in an insulated manner. In other words, the electrode lead-out portion 211 is a member (electrode terminal) mounted on one wall of the housing 212 in an insulated manner, and no electrical connection is formed between the electrode lead-out portion 211 and the wall portion 2121 of the housing 212, so that the electrode lead-out portion 211 and the additional portion 232 of the current collecting member 23 are connected through welding to implement input and output of electric energy of the battery cell 20.

The housing 212 is further disposed on the housing assembly 21, and the electrode lead-out portion 211 is mounted on the wall portion 2121 of the housing 212 in an insulated manner, so that electric energy of the battery cell 20 can be input or output through the electrode lead-out portion 211. The battery cell 20 of such a structure can be used to reduce a risk of a short circuit between the electrode lead-out portion 211 and the housing 212.

According to some embodiments of the present application, referring to FIG. 4 and FIG. 5, and FIG. 14 and FIG. 15, the housing 212 may include a case 2122 and an end cap 2123, an accommodating cavity having an opening 2122a is formed inside the case 2122, and the electrode assembly 22 is accommodated in the accommodating cavity. The end cap 2123 closes the opening 2122a, and the end cap 2123 is the wall portion 2121.

Here, the end cap 2123 is the wall portion 2121. In other words, the end cap 2123 is connected to the additional portion 232 of the current collecting member 23 through welding, or the electrode lead-out portion 211 is mounted on the end cap 2123 in an insulated manner, so that the current collecting member 23 is located between the body 221 and the end cap 2123 in the first direction X.

The wall portion 2121 of the housing 212 is the end cap 2123 of the housing 212 for closing the opening 2122a of the case 2122, and the battery cell 20 of such a structure is used to facilitate assembly of the current collecting member 23. This helps reduce difficulty of connection between the current collecting member 23 and the electrode lead-out portion 211 and between the current collecting member 23 and the tab 222, to improve production efficiency of the battery cell 20.

It should be noted that the structure of the battery cell 20 is not limited thereto. In some embodiments, the battery cell 20 may have another structure. For example, the housing 212 may include a case 2122 and an end cap 2123, the case 2122 includes a side wall and the wall portion 2121 that are integrally formed. The side wall is disposed around the wall portion 2121, one end of the side wall is connected to the wall portion 2121, the other end of the side wall encloses an opening 2122a opposite to the wall portion 2121, and the side wall and the wall portion 2121 jointly define an accommodating cavity for accommodating the electrode assembly 22. The end cap 2123 closes the opening 2122a. In other words, the wall portion 2121 is a bottom wall that is of the case 2122 and that is disposed opposite to the end cap 2123 in the first direction X, that is, the bottom wall of the case 2122 is connected to the additional portion 232 of the current collecting member 23 through welding, or the electrode lead-out portion 211 is mounted on the bottom wall of the case 2122 in an insulated manner.

Here, the case 2122 includes the side wall and the wall portion 2121 that are integrally formed, that is, the case 2122 is manufactured by using an integral molding process, for example, stamping, casting, or extrusion molding. In other words, the side wall and the wall portion 2121 of the case 2122 are of an integral structure.

The wall portion 2121 is disposed as a wall that is of the case 2122 and that is disposed opposite to the end cap 2123, so that the battery cell 20 of such a structure can be used to keep the current collecting member 23 and the like away from the end cap 2123, and there is no direct connection relationship between the wall portion 2121 and the end cap 2123, so as to alleviate a phenomenon that force generated when the current collecting member 23 and the like pull or twist the wall portion 2121 acts on the end cap 2123, thereby reducing a risk of a connection failure between the end cap 2123 and the case 2122, and further reducing a leakage risk of the battery cell 20 during use.

According to some embodiments of the present application, the present application further provides a battery 100, where the battery 100 includes the battery cell 20 in any one of the foregoing solutions.

In some embodiments, referring to FIG. 2, the battery 100 may further include a box 10, and the box 10 is configured to accommodate the battery cell 20.

Here, the box 10 is used for providing assembly space for the battery cell 20, and the box 10 may have various structures. For example, the box 10 may include a first box body 11 and a second box body 12, the first box body 11 and the second box body 12 cover each other, and the first box body 11 and the second box body 12 jointly define the assembly space for accommodating the battery cell 20.

Optionally, the second box body 12 may be a hollow structure with an opening at one end, the first box body 11 may be a plate-shaped structure, and the first box body 11 covers an opening side of the second box body 12, so that the first box body 11 and the second box body 12 jointly define the assembly space. Alternatively, the first box body 11 and the second box body 12 each may be a hollow structure with an opening at one side, and an opening side of the first box body 11 covers an opening side of the second box body 12.

Certainly, the box 10 formed by the first box body 11 and the second box body 12 may be in a plurality of shapes, for example, a cylinder or a cuboid. For example, in FIG. 2, the shape of the box 10 is a cuboid.

Optionally, there may be one or a plurality of battery cells 20 accommodated in the box 10. For example, in FIG. 2, the battery 100 may include a plurality of battery cells 20, and the plurality of battery cells 20 may be subjected to series connection, parallel connection, or series-parallel connection. The series-parallel connection means that the plurality of battery cells 20 are subjected to both series connection and parallel connection. The plurality of battery cells 20 may be subjected to series connection, parallel connection, or series-parallel connection directly, and then an integration formed by the plurality of battery cells 20 is accommodated in the box 10. Certainly, the battery 100 may be alternatively a battery module formed by integrating the plurality of battery cells 20 by series connection, parallel connection, or series-parallel connection, and then a plurality of battery modules are integrated by series connection, parallel connection, or series-parallel connection, and accommodated in the box 10.

In some embodiments, the battery 100 may further include another structure. For example, the battery 100 may further include a current converging component, and the current converging component is configured to connect the plurality of battery cells 20, to implement electrical connections between the plurality of battery cells 20.

It should be noted that, in some embodiments, the box 10 may not be disposed on the battery 100, the battery 100 may include the plurality of battery cells 20, and the battery 100 composed of the plurality of battery cells 20 may be directly assembled to an electric device to supply electric energy to the electric device through the plurality of battery cells 20. In other words, the box 10 may be used as a part of the electric device. That the electric device is a vehicle 1000 is used as an example. The box 10 may be used as a part of a chassis structure of the vehicle 1000. For example, a part of the box 10 may be used as at least a part of a floor of the vehicle 1000, or a part of the box 10 may be used as at least a part of a cross beam and a longitudinal beam of the vehicle 1000.

According to some embodiments of the present application, the present application further provides an electric device. The electric device includes the battery 100 in any one of the foregoing solutions, and the battery 100 is configured to provide electric energy for the electric device.

The electric device may be any one of the foregoing devices or systems using the battery 100.

According to some embodiments of the present application, referring to FIG. 3 to FIG. 9 and FIG. 12, provided in the present application is a battery cell 20. The battery cell 20 includes a housing assembly 21, an electrode assembly 22, and a current collecting member 23. The housing assembly 21 has an electrode lead-out portion 211 for inputting or outputting electric energy, the housing assembly 21 may include a housing 212, the housing 212 has a wall portion 2121, and the wall portion 2121 is the electrode lead-out portion 211. The housing 212 includes a case 2122 and an end cap 2123, an accommodating cavity having an opening 2122a is formed inside the case 2122, the end cap 2123 closes the opening 2122a, and the end cap 2123 is the wall portion 2121. In a first direction X, a convex portion 2121a is formed on a side that is of the wall portion 2121 and that faces the inside of the housing 212, and a groove 2121b is formed on a side that is of the wall portion 2121 and that faces away from the inside of the housing 212 and at a position corresponding to the convex portion 2121a. The electrode assembly 22 is accommodated in the accommodating cavity of the case 2122, the electrode assembly 22 includes a body 221 and a tab 222, the body 221 is cylindrical, a central axis of the body 221 extends in the first direction X, the tab 222 is connected to an end that is of the body 221 and that faces the electrode lead-out portion 211 in the first direction X, and a material of the tab 222 is different from that of the electrode lead-out portion 211. The current collecting member 23 is disposed in the housing 212 of the housing assembly 21, the current collecting member 23 includes a body portion 231 and an additional portion 232 connected to each other, a material of the body portion 231 is the same as material of the tab 222, a material of the additional portion 232 is the same as a material of the electrode lead-out portion 211, the body portion 231 is connected to the tab 222 through welding, and the additional portion 232 is connected to the convex portion 2121a through welding. In the first direction X, the current collecting member 23 is disposed between the electrode assembly 22 and the electrode lead-out portion 211, the body portion 231 has a first surface 2311 facing the electrode lead-out portion 211, an accommodating groove 2312 is disposed on the first surface 2311, a part of the additional portion 232 is accommodated in the accommodating groove 2312, the additional portion 232 protrudes from the first surface 2311 in the first direction X, and the part that is of the additional portion 232 and that protrudes from the first surface 2311 is connected to the electrode lead-out portion 211 through welding. The additional portion 232 has an annular structure, and correspondingly, the accommodating groove 2312 is an annular groove extending in an extension direction of the additional portion 232. In the first direction X, the groove depth of the accommodating groove 2312 is H₁, and the thickness of the additional portion 232 is H₂, which satisfy H₂ - H₁ ≥ 0.2 H₂.

**In** a second direction Y, the additional portion 232 has two opposing first side surfaces 2321, the two first side surfaces 2321 are respectively an inner circumferential surface and an outer circumferential surface of the additional portion 232, the two first side surfaces 2321 respectively abut against two opposing groove side surfaces of the accommodation groove 2312, and the two first side surfaces 2321 each are connected to the first surface 2311 through welding, where the second direction Y is perpendicular to the first direction X. The two first side surfaces 2321 each are connected to the first surface 2311 through welding to form two first welding portions 233, where projections of the two first welding portions 233 in a plane perpendicular to the first direction X do not overlap. The body portion 231 is connected to the tab 222 through welding to form a second welding portion 24, the additional portion 232 surrounds the outer side of the second welding portion 24, and projections of the first welding portion 233 and the second welding portion 24 in a plane perpendicular to the first direction X do not overlap. The additional portion 232 is connected to the convex portion 2121a through welding to form a third welding portion 25, the third welding portion 25 penetrates the electrode lead-out portion 211 in the first direction X, and projections of the first welding portion 233 and the third welding portion 25 in a plane perpendicular to the first direction X do not overlap. The first welding portion 233, the second welding portion 24, and the third welding portion 25 each have an annular structure, two first welding portions 233 each surround the outer side of the second welding portion 24, the third welding portion 25 surrounds the outer side of one first welding portion 233, and the other first welding portion 233 surrounds the outer side of the third welding portion 25.

A projected area of the first welding portion 233 in a plane perpendicular to the first direction X is S₁, a projected area of the second welding portion 24 in a plane perpendicular to the first direction X is S₂, and a projected area of the third welding portion 25 in a plane perpendicular to the first direction X is S₃, which satisfy 0.8 ≤ S₁/S₂ ≤ 1.2, 0.8 ≤ S₁/S₃ ≤ 1.2, and 0.8 ≤ S₂/S₃ ≤ 1.2.

It should be noted that, without contradictory, the embodiments in the present application may be combined with the features in the embodiments.

The foregoing descriptions are merely preferred embodiments of the present application, and are not intended to limit the present application. For a person skilled in the art, various modifications and changes may be made in the present application. Any modification, equivalent replacement, or improvement made without departing from the spirit and principle of the present application shall fall within the protection scope of the present application.

## Claims

1. A battery cell, comprising:
a housing assembly comprising an electrode lead-out portion for inputting or outputting electric energy;
an electrode assembly accommodated in the housing assembly, wherein the electrode assembly comprises a body and a tab, the tab is disposed on the body, and a material of the tab is different from that of the electrode lead-out portion; and
a current collecting member disposed in the housing assembly, wherein the current collecting member comprises a body portion having a same material as the tab and an additional portion having a same material as the electrode lead-out portion, the body portion is connected to the additional portion, the body portion is connected to the tab through welding, and the additional portion is connected to the electrode lead-out portion through welding.

2. The battery cell according to claim 1, wherein at least a part of the current collecting member is disposed between the electrode assembly and the electrode lead-out portion in a first direction,
wherein in the first direction, the additional portion is connected to a side that is of the body portion and that faces away from the electrode assembly.

3. The battery cell according to claim 2, wherein in the first direction, the body portion has a first surface facing the electrode lead-out portion, an accommodating groove is disposed on the first surface, and at least a part of the additional portion is accommodated in the accommodating groove.

4. The battery cell according to claim 3, wherein in the first direction, the additional portion protrudes from the first surface, and a part that is of the additional portion and that protrudes from the first surface is connected to the electrode lead-out portion through welding.

5. The battery cell according to claim 3, wherein in the first direction, the additional portion has a second surface facing the electrode lead-out portion, and the second surface is flush with the first surface.

6. The battery cell according to any one of claims 3 to 5, wherein the additional portion is of an annular structure.

7. The battery cell according to claim 6, wherein the accommodating groove is an annular groove extending in an extension direction of the additional portion.

8. The battery cell according to any one of claims 2 to 7, wherein the current collecting member comprises a plurality of additional portions, the plurality of additional portions each are connected to the body portion, and in the first direction, projections of the plurality of the additional portions in a plane perpendicular to the first direction do not overlap each other.

9. The battery cell according to any one of claims 1 to 8, wherein the body portion is connected to the additional portion through welding.

10. The battery cell according to claim 9, wherein the current collecting member is disposed between the electrode assembly and the electrode lead-out portion in the first direction,
wherein in the first direction, the body portion has the first surface facing the electrode lead-out portion, in a second direction, the additional portion has a first side surface, the first side surface is connected to the first surface through welding, and the second direction is perpendicular to the first direction.

11. The battery cell according to claim 10, wherein in the second direction, the additional portion has two first side surfaces disposed opposite to each other, and the two first side surfaces each are connected to the first surface through welding.

12. The battery cell according to claim 11, wherein the additional portion is of an annular structure, and the two first side surfaces are respectively an inner circumferential surface and an outer circumferential surface of the additional portion.

13. The battery cell according to claim 11 or 12, wherein the two first side surfaces each are connected to the first surface through welding to form two first welding portions,
wherein projections of the two first welding portions in a plane perpendicular to the first direction do not overlap.

14. The battery cell according to any one of claims 10 to 13, wherein the accommodating groove for accommodating the additional portion is disposed on the first surface, and the additional portion protrudes from the first surface in the first direction, so that the first side surface extends to the outside of the accommodating groove.

15. The battery cell according to claim 14, wherein in the first direction, the groove depth of the accommodating groove is H₁, and the thickness of the additional portion is H₂, which satisfy H₂ - H₁ ≥ 0.2 H₂.

16. The battery cell according to claim 14 or 15, wherein the first side surface abuts against a groove side surface of the accommodating groove.

17. The battery cell according to any one of claims 2 to 16, wherein the additional portion is connected to the body portion through welding to form at least one first welding portion, and the body portion is connected to the tab through welding to form at least one second welding portion,
wherein projections of the at least one first welding portion and the at least one second welding portion in a plane perpendicular to the first direction do not overlap.

18. The battery cell according to claim 17, wherein the additional portion surrounds an outer side of the second welding portion.

19. The battery cell according to claim 17 or 18, wherein the at least one second welding portion comprises two second welding portions, the additional portion surrounds an outer side of one second welding portion, and the other second welding portion surrounds an outer side of the additional portion.

20. The battery cell according to any one of claims 2 to 19, wherein the additional portion is connected to the body portion through welding to form the at least one first welding portion, and the additional portion is connected to the electrode lead-out portion through welding to form at least one third welding portion,
wherein projections of the at least one first welding portion and the at least one third welding portion in a plane perpendicular to the first direction do not overlap.

21. The battery cell according to claim 20, wherein the third welding portion penetrates the electrode lead-out portion in the first direction.

22. The battery cell according to claim 21, wherein the third welding portion is configured to be formed by irradiating a laser from a side that is of the electrode lead-out portion and that faces away from the electrode assembly to melt at least parts of the electrode lead-out portion and the additional portion.

23. The battery cell according to any one of claims 20 to 22, wherein the third welding portion does not penetrate the additional portion in the first direction.

24. The battery cell according to any one of claims 2 to 23, wherein the additional portion is connected to the body portion through welding to form the at least one first welding portion, the body portion is connected to the tab through welding to form the at least one second welding portion, and the additional portion is connected to the electrode lead-out portion through welding to form the at least one third welding portion,
wherein a projected area of the at least one first welding portion in a plane perpendicular to the first direction is S₁, a projected area of the at least one second welding portion in a plane perpendicular to the first direction is S₂, and a projected area of the at least one third welding portion in a plane perpendicular to the first direction is S₃, which satisfy 0.8 ≤ S₁/S₂ ≤ 1.2, and/or 0.8 ≤ S₁/S₃ ≤ 1.2, and/or 0.8 ≤ S₂/S₃ ≤ 1.2.

25. The battery cell according to any one of claims 2 to 24, wherein the additional portion is connected to the body portion through welding to form the at least one first welding portion, and the first welding portion is of an annular structure; and/or
the body portion is connected to the tab through welding to form the at least one third welding portion, and the third welding portion is of an annular structure.

26. The battery cell according to any one of claims 1 to 25, wherein the tab is disposed at an end that is of the body and that faces the body portion.

27. The battery cell according to any one of claims 1 to 26, wherein the body is cylindrical.

28. The battery cell according to any one of claims 1 to 27, wherein the housing assembly comprises a housing, and the electrode assembly is accommodated in the housing,
wherein the housing has a wall portion, and the wall portion is the electrode lead-out portion.

29. The battery cell according to claim 28, wherein a convex portion is formed on a side that is of the wall portion and that faces the electrode assembly, and the convex portion is connected to the additional portion through welding.

30. The battery cell according to claim 29, wherein a groove is formed on a side that is of the wall portion and that faces away from the electrode assembly and at a position corresponding to the convex portion.

31. The battery cell according to any one of claims 1 to 27, wherein the housing assembly further comprises a housing, and the electrode assembly is accommodated in the housing,
wherein the housing has a wall portion, and the electrode lead-out portion is mounted on the wall portion in an insulated manner.

32. The battery cell according to any one of claims 28 to 31, wherein the housing comprises:
a case in which an accommodating cavity having an opening is formed, wherein the electrode assembly is accommodated in the accommodating cavity; and
an end cap closing the opening,
wherein the end cap is the wall portion.

33. The battery cell according to any one of claims 28 to 31, wherein the housing comprises:
a case comprising a side wall and the wall portion that are integrally formed, wherein the side wall is disposed around the wall portion, one end of the side wall is connected to the wall portion, the other end of the side wall encloses an opening opposite to the wall portion, and the side wall and the wall portion jointly define an accommodating cavity for accommodating the electrode assembly; and
an end cap closing the opening.

34. A battery, comprising the battery cell according to any one of claims 1 to 33.

35. An electric device, comprising the battery according to claim 34.
